(19)

Europäisches
Patentamt
European
Patent Office
Office européen
des brevets

(11)  **EP 2 404 972 A2**

(12)  # EUROPEAN PATENT APPLICATION

(43) Date of publication:
**11.01.2012 Bulletin 2012/02**

(51) Int Cl.:
***C09J 7/02*** (2006.01)

(21) Application number: **11168035.1**

(22) Date of filing: **30.05.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **02.06.2010 JP 2010127202**

(71) Applicant: **Nitto Denko Corporation
Osaka 567-8680 (JP)**

(72) Inventors:
• **Nakayama, Naoki
Ibaraki-shi, Osaka 567-8680 (JP)**
• **Tamura, Akinori
Ibaraki-shi, Osaka 567-8680 (JP)**

(74) Representative: **Grünecker, Kinkeldey,
Stockmair & Schwanhäusser
Anwaltssozietät
Leopoldstrasse 4
80802 München (DE)**

(54)  **Double-coated pressure-sensitive adhesive tape**

(57)      Disclosed is a double-coated pressure-sensitive adhesive tape which has a small total thickness, includes a foam layer, and excels in removability. The double-coated pressure-sensitive adhesive tape has a total thickness of 500 $\mu$m or less and includes a foam layer; a reinforcing layer; and two surface pressure-sensitive adhesive layers, in which at least one of the two surface pressure-sensitive adhesive layers is formed from a pressure-sensitive adhesive composition containing an acrylic polymer, a tackifier resin, and a crosslinking agent, the acrylic polymer including, as an essential monomer component, an alkyl (meth)acrylate whose alkyl moiety being a linear or branched-chain alkyl group having 4 to 9 carbon atoms.

[Fig. 1]

EP 2 404 972 A2

## Description

Technical Field

The present invention relates to a double-coated pressure-sensitive adhesive tape. More specifically, it relates to a double-coated pressure-sensitive adhesive tape which is thin, includes a foam layer, and excels in removability.

Background Art

Substrate-supported double-coated pressure-sensitive adhesive tapes (double-coated self-adhesive tapes) including a substrate and, arranged on both sides thereof, pressure-sensitive adhesive layers (self-adhesive layers) have been used as highly reliable bonding devices and fixing devices in various industries. Typically, they are used in parts assembling or bonding of parts with each other.

Exemplary substrate-supported double-coated pressure-sensitive adhesive tapes include those using a nonwoven fabric as the substrate (Patent Literature (PTL) 1); those using a paper as the substrate; and those using a plastic film as the substrate.

As the function of waterproof has been required of cellular phones, substrate-supported double-coated pressure-sensitive adhesive tapes used for the fixing or fastening of parts in such cellular phones should be waterproof (be sealable against water). The known substrate-supported double-coated pressure-sensitive adhesive tapes, however, fail to provide satisfactory waterproofness. Typically, nonwoven fabrics and paper, if used as a material for the substrate, are impregnatable with water (absorb water) and the resulting substrate-supported double-coated pressure-sensitive adhesive tapes are inferior in waterproofness. Plastic films, if used as a material for the substrate, are relatively rigid, the resulting substrate-supported double-coated pressure-sensitive adhesive tapes do not satisfactorily conform to uneven or bumped portions(have poor fittability to uneven or bumped portions), and thereby suffer from problems such as a gap in the uneven portions to show unsatisfactory waterproofness.

In addition, such substrate-supported double-coated pressure-sensitive adhesive tapes should be reduced in thickness for the reduction in weight, size, and thickness of products in which the adhesive tapes are used.

Citation List

Patent Literature

PTL 1: Japanese Unexamined Patent Application Publication No. 2001-152111

Summary of Invention

Technical Problem

The present inventors found that a double-coated pressure-sensitive adhesive tape being thin but having satisfactory waterproofness can be obtained by using a foam substrate as the substrate of a substrate-supported double-coated pressure-sensitive adhesive tape and configuring the adhesive tape to be thin.

However, the substrate-supported double-coated pressure-sensitive adhesive tape using a foam substrate still has some problems. For example, when the adhesive tape is to be peeled off from an adherend (adhered portion) for disjoining of products or for recovery of parts from the products, interlaminar peeling between the foam substrate and the pressure-sensitive adhesive layer may occur, the foam substrate may be broken, the foam substrate may cleave to cause delamination, and/or the pressure-sensitive adhesive may remain and deposit on the adherend. These problems occur particularly when the substrate-supported double-coated pressure-sensitive adhesive tape using a foam substrate has a small total thickness, because of insufficient strength of the foam substrate.

For these reasons, there has not yet been obtained a substrate-supported double-coated pressure-sensitive adhesive tape which uses a foam substrate, has a small total thickness, and excels in removability.

Accordingly, an object of the present invention is to provide a double-coated pressure-sensitive adhesive tape which has a small total thickness, includes a foam layer, and excels in removability.

Solution to Problem

After intensive investigations to achieve the object, the present inventors have found that a double-coated pressure-sensitive adhesive tape whose two surface layers being pressure-sensitive adhesive layers may have satisfactory removability even though it includes a foam layer and has a total thickness of 500 $\mu$m or less, by arranging a reinforcing layer in addition to the foam layer and using a pressure-sensitive adhesive layer having a specific composition as at least one of the two surface layers. The present invention has been made based on these findings.

Specifically, the present invention provides, in an aspect, a double-coated pressure-sensitive adhesive tape having a total thickness of 500 μm or less and including at least one foam layer; at least one reinforcing layer; and two surface pressure-sensitive adhesive layers as surface layers, in which at least one of the two surface pressure-sensitive adhesive layers is formed from a pressure-sensitive adhesive composition containing an acrylic polymer, a tackifier resin, and a crosslinking agent, and the acrylic polymer includes monomer units of an alkyl (meth)acrylate whose alkyl moiety being a linear or branched-chain alkyl group having 4 to 9 carbon atoms as an essential monomer component.

In a preferred embodiment of the double-coated pressure-sensitive adhesive tape, the pressure-sensitive adhesive composition contains the tackifier resin in a content of 5 to 50 parts by weight and the crosslinking agent in a content of 0.001 to 10 parts by weight per 100 parts by weight of the acrylic polymer.

In another preferred embodiment of the double-coated pressure-sensitive adhesive tape, the crosslinking agent is an isocyanate crosslinking agent, and the acrylic polymer is an acrylic polymer including monomer units of: the alkyl (meth) acrylate whose alkyl moiety being a linear or branched-chain alkyl group having 4 to 9 carbon atoms; a carboxyl-containing monomer, and a hydroxyl-containing monomer as essential monomer components.

In yet another preferred embodiment of the double-coated pressure-sensitive adhesive tape, the acrylic polymer includes monomer units of: 80 to 99.9 percent by weight of the alkyl (meth)acrylate whose alkyl moiety being a linear or branched-chain alkyl group having 4 to 9 carbon atoms; 0.1 to 10 percent by weight of the carboxyl-containing monomer; and 0.01 to 5 percent by weight of the hydroxyl-containing monomer, based on the total amount of monomer components constituting the acrylic polymer.

The present invention further provides, in another aspect, a double-coated pressure-sensitive adhesive tape having a total thickness of 500 μm or less and including at least one foam layer; at least one reinforcing layer; and two surface pressure-sensitive adhesive layers as surface layers constituting two adhesive faces, in which, in at least one of the two adhesive faces, the adhesive tape has a 180-degree peel strength of 15 newtons per 10 mm (N/10 mm) or less (under peeling conditions of 23°C, 50% relative humidity, a tensile speed of 5 meters per minute (m/min), and a peel angle of 180 degrees, with respect to a glass plate) and causes no adhesive deposit in the following removability evaluation test:

Removability evaluation test: the double-coated pressure-sensitive adhesive tape (10 mm in width and 100 mm in length) is affixed to a glass plate (trade name "Slide Glass Hakuenma No. 1" supplied by Matsunami Glass Ind., Ltd.), left stand in an atmospheric temperature of 23°C and relative humidity of 50% for 30 minutes, then peeled off from the glass plate at a peel angle of 180 degrees and a tensile speed of 5 m/min, and thereafter whether the adhesive remains on the surface of the glass plate is visually observed.

As used herein the term "removability" refers to such a property of a pressure-sensitive adhesive tape that, upon removal of the pressure-sensitive adhesive tape from an adherend, the pressure-sensitive adhesive tape can be separated from the adherend at the interface between the adherend and the adhesive face without deposit (residue) or transfer of the pressure-sensitive adhesive on the adherend and without fracture of the pressure-sensitive adhesive tape, and that the pressure-sensitive adhesive tape can be easily peeled off from the adhered without needing strong force. Advantageous Effects of Invention

The double-coated pressure-sensitive adhesive tapes according to embodiments of the present invention each include a foam layer, have a small total thickness, and excel in removability. In addition, the double-coated pressure-sensitive adhesive tapes, as including the foam layer, may have satisfactory characteristic properties such as shock absorption, fittability to uneven or bumped portions, waterproofness (sealability against water), workability, and sealing performance (hermeticity).

These and other objects, features, and advantages of the present invention will be more fully understood from the following description of preferred embodiments with reference to the attached drawings. All numbers are herein assumed to be modified by the term "about."

Brief Description of Drawings

Fig. 1 is a schematic cross-sectional view illustrating a double-coated pressure-sensitive adhesive tape as an embodiment of the present invention;
Figs. 2A and 2B are a schematic top view and a schematic cross-sectional view along the lines A-A', respectively, of a test specimen for use in the measurement of a push out force;
Fig. 3 is a schematic cross-sectional view illustrating how to measure the push out force;

Figs. 4A and 4B are a schematic top view and a schematic cross-sectional view along the lines B-B', respectively, of a test specimen for use in the measurement of drop impact resistance; and

Figs. 5A and 5B are a schematic top view and a schematic cross-sectional view along the lines C-C', respectively, of a test specimen for use in the testing of waterproofness.

Description of Embodiments

The double-coated pressure-sensitive adhesive tapes according to embodiments of the present invention each include at least a foam layer, a reinforcing layer, and two pressure-sensitive adhesive layers as surface layers (hereinafter such a "pressure-sensitive adhesive layer as a surface layer" is also referred to as a "surface pressure-sensitive adhesive layer"). As used herein the term "pressure-sensitive adhesive tape" or "self-adhesive tape" also includes one in the form of a sheet, namely, includes a "pressure-sensitive adhesive sheet (self-adhesive sheet)." The double-coated pressure-sensitive adhesive tapes may be in the form of a laminate of stacked sheets or may be in the form of a roll as being wound.

The double-coated pressure-sensitive adhesive tapes may have any laminate structure (layer structure), as long as including two surface pressure-sensitive adhesive layers and including at least one foam layer and at least one reinforcing layer. In the double-coated pressure-sensitive adhesive tapes, the reinforcing layer and foam layer may be laid directly on each other or indirectly with the interposition of a pressure-sensitive adhesive layer. The double-coated pressure-sensitive adhesive tapes may include one or more foam layers and one or more reinforcing layers, respectively.

When the double-coated pressure-sensitive adhesive tapes include at least one foam layer, at least one reinforcing layer, and two surface pressure-sensitive adhesive layers, and when one of the two surface pressure-sensitive adhesive layers is relatively nearer to the reinforcing layer than to the foam layer (has a smaller distance in the thickness direction from the reinforcing layer than that from the foam layer), and the other surface pressure-sensitive adhesive layer is nearer to the foam layer than to the reinforcing layer (has a smaller distance in the thickness direction from the foam layer than that from the reinforcing layer), the surface pressure-sensitive adhesive layer having a smaller distance from the reinforcing layer may be referred to as a "reinforcing-layer-side surface pressure-sensitive adhesive layer"; and the other surface pressure-sensitive adhesive layer having a smaller distance from the foam layer may be referred to as a "foam-layer-side surface pressure-sensitive adhesive layer." In the double-coated pressure-sensitive adhesive tapes, a "reinforcing-layer-side adhesive face" refers to an adhesive face provided by the reinforcing-layer-side surface pressure-sensitive adhesive layer; and a "foam-layer-side adhesive face" refers to an adhesive face provided by the foam-layer-side surface pressure-sensitive adhesive layer.

In a preferred embodiment, the double-coated pressure-sensitive adhesive tape includes at least one foam layer, at least one reinforcing layer, and two surface pressure-sensitive adhesive layers, in which at least one of the two surface pressure-sensitive adhesive layers is a reinforcing-layer-side pressure-sensitive adhesive layer. Illustrative embodiments of the double-coated pressure-sensitive adhesive tape as the preferred embodiment include (a) a double-coated pressure-sensitive adhesive tape including at least one foam layer, at least one reinforcing layer, and two surface pressure-sensitive adhesive layers, in which the two surface pressure-sensitive adhesive layers are both reinforcing-layer-side surface pressure-sensitive adhesive layers; and (b) a double-coated pressure-sensitive adhesive tape including at least one foam layer, at least one reinforcing layer, and two surface pressure-sensitive adhesive layers in which one of the two surface pressure-sensitive adhesive layers is a reinforcing-layer-side surface pressure-sensitive adhesive layer, and the other surface pressure-sensitive adhesive layer is a foam-layer-side surface pressure-sensitive adhesive layer.

Among them, the double-coated pressure-sensitive adhesive tape is more preferably (b) a double-coated pressure-sensitive adhesive tape including at least one foam layer, at least one reinforcing layer, and two surface pressure-sensitive adhesive layers, in which one of the two surface pressure-sensitive adhesive layers is a reinforcing-layer-side surface pressure-sensitive adhesive layer, and the other surface pressure-sensitive adhesive layer is a foam-layer-side surface pressure-sensitive adhesive layer. This is because, when a member (part or component) is fixed or applied to a target work(object) (e.g., container, cabinet, or product) at a desired position through the double-coated pressure-sensitive adhesive tape, it is preferred for satisfactory removability to apply the reinforcing-layer-side adhesive face to the member and to apply the foam-layer-side adhesive face to the target work.

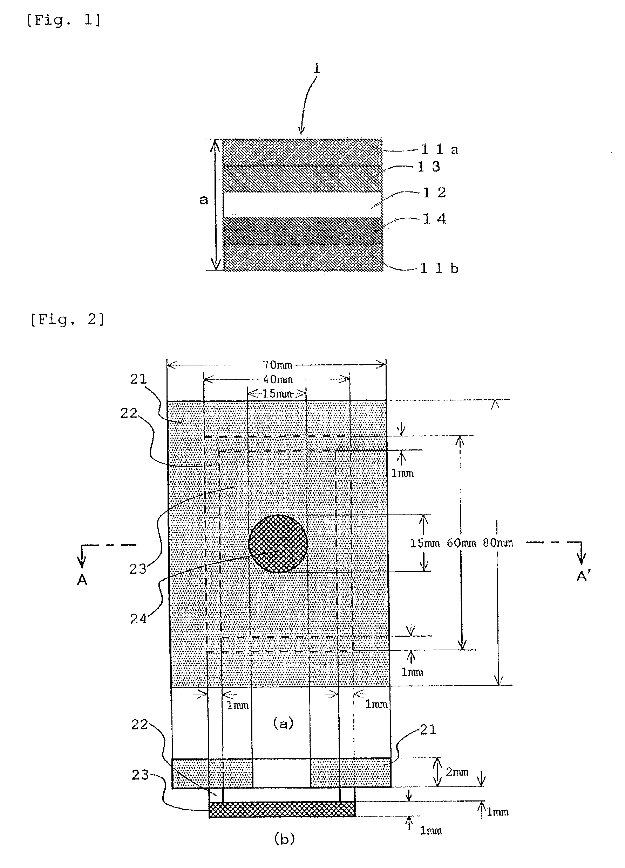

In a representative preferred embodiment, the double-coated pressure-sensitive adhesive tape structurally includes a foam layer; a pressure-sensitive adhesive layer on one side of the foam layer; a reinforcing layer above the other side of the foam layer with the interposition of a pressure-sensitive adhesive layer; and a pressure-sensitive adhesive layer on the reinforcing layer [laminate structure of (pressure-sensitive adhesive layer) / (foam layer) / (pressure-sensitive adhesive layer)/(reinforcing layer) / (pressure-sensitive adhesive layer)] (see Fig. 1).

Fig. 1 illustrates a representative exemplary structure of the double-coated pressure-sensitive adhesive tapes according to embodiments of the present invention. In Fig. 1, the reference signs "1" stands for a double-coated pressure-sensitive adhesive tape; "11a" and "11b" each stand for a pressure-sensitive adhesive layer; "12" stands for a pressure-sensitive adhesive layer; "13" stands for a foam layer; and "14" stands for a reinforcing layer. The pressure-sensitive adhesive layer 11a and pressure-sensitive adhesive layer 11b function as layers providing adhesive faces of the double-coated pressure-sensitive adhesive tape; and the pressure-sensitive adhesive layer 12 is a layer for fixing the foam layer and the reinforcing layer to each other. This double-coated pressure-sensitive adhesive tape has a laminate structure between the foam layer and one surface pressure-sensitive adhesive layer as an outermost layer, and another laminate structure between the reinforcing layer and the other surface pressure-sensitive adhesive layer as an outermost layer. In the double-coated pressure-sensitive adhesive tape having this configuration, the pressure-sensitive adhesive layer 11a on the foam layer 13 is a "foam-layer-side surface pressure-sensitive adhesive layer," and the adhesive face provided by the pressure-sensitive adhesive layer 11a is a "foam-layer-side adhesive face." Likewise, the pressure-sensitive adhesive layer 11b on the reinforcing layer 14 is a "reinforcing-layer-side surface pressure-sensitive adhesive layer," and an adhesive face provided by the pressure-sensitive adhesive layer 11b is a "reinforcing-layer-side adhesive face." The "total thickness" of the double-coated pressure-sensitive adhesive tape illustrated in Fig. 1 refers to a distance in the thickness direction (distance a) from the foam-layer-side adhesive face (adhesive face provided by the pressure-sensitive adhesive layer 11a) to the reinforcing-layer-side adhesive face (adhesive face provided by the pressure-sensitive adhesive layer 11b).

The double-coated pressure-sensitive adhesive tapes each have a total thickness of 500 $\mu$m or less (e.g., 80 to 500 $\mu$m), preferably 400 $\mu$m or less (e.g., 100 to 400 $\mu$m), more preferably 300 $\mu$m or less (e.g., 120 to 300 $\mu$m), and furthermore preferably 200 $\mu$m or less (e.g., 150 to 200 $\mu$m), for reduction in thickness, size, and weight, and for resource savings. As used herein the term "total thickness" of the double-coated pressure-sensitive adhesive tape refers to a thickness from one pressure-sensitive adhesive layer surface (adhesive face) to the other pressure-sensitive adhesive layer surface.

Foam Layer
The double-coated pressure-sensitive adhesive tapes each include at least one foam layer. The foam layer is a layer having a foam structure (cell structure). The foam layer is composed of a foam (foam structure).

Though not limited, the foam layer preferably has a closed cell structure or a semi-open/semi-closed cell structure (a cell structure including both a closed cell structure and an open cell structure as a mixture in any arbitrary proportions). Particularly for satisfactory flexibility, the foam layer has such a cell structure as to include a closed cell structure in a content of preferably 40% or less and more preferably 30% or less.

Though being settable according typically to the intended use, the density (apparent density) of the foam layer in the double-coated pressure-sensitive adhesive tape is preferably 0.67 g/cm$^3$ or less, more preferably 0.40 g/cm$^3$ or less, and furthermore preferably 0.20 g/cm$^3$ or less. The lower limit of the apparent density of the foam layer is preferably 0.02 g/cm$^3$ or more, and more preferably 0.03 g/cm$^3$ or more. The foam layer, if having an apparent density of more than 0.67 g/cm$^3$, may not be expanded (foamed) sufficiently and thereby have poor flexibility to cause problems. In contrast, the foam layer, if having an apparent density of less than 0.02 g/cm$^3$, may show remarkably low strength, thus being undesirable.

Though not critical, the foam layer of the double-coated pressure-sensitive adhesive tape has an average cell diameter (average bubble diameter) of preferably 10 to 1000 $\mu$m, more preferably 15 to 800 $\mu$m, and furthermore preferably 20 to 600 $\mu$m from the viewpoints typically of shock absorption, fittability to uneven or bumped portions, waterproofness, workability (processibility), and sealing performance.

A foam constituting the foam layer of the double-coated pressure-sensitive adhesive tape is preferably, but is not limited to, a plastic foam (resin foam). Plastic materials (inclusive of rubber materials) for forming the plastic foam are not limited and may be chosen as appropriate from known plastic materials. Each of different plastic materials may be used alone or in combination. The foam may have a single-layer structure or multilayer structure.

Specifically, exemplary plastic foams include olefinic resin foams such as polyethylene foams, polypropylene foams, ethylene-propylene copolymer foams, and ethylene-vinyl acetate copolymer foams; polyester resin foams such as poly(ethylene terephthalate) foams, poly(ethylene naphthalate) foams, and poly(butylene terephthalate) foams; poly (vinyl chloride) resin foams such as poly(vinyl chloride) foams; vinyl acetate resin foams; poly(phenylene sulfide) resin foams; amide resin foams such as polyamide (nylon) resin foams and wholly aromatic polyamide (aramid) resin foams; polyimide resin foams; poly(ether ether ketone) (PEEK) resin foams; styrenic resin foams such as polystyrene foams; and urethane resin foams such as polyurethane resin foams. Rubber resin foams may also be used as the plastic foams.

Among them, olefinic resin foams are preferred, of which polyethylene foams and polypropylene foams are typically preferred, because these foams are satisfactorily resistant to chemicals and solvents, are resistant to moisture permeation, have good elasticity, and show satisfactory workability.

Cell form, cell size, thickness of cell wall and other parameters or properties of cells constituting the plastic foam are not especially limited and can be chosen or set from among cell parameters or properties of known plastic foams. For example, the cells constituting the plastic foam may be open cells, closed cells, or any mixture of them. The plastic foam can be prepared according to a known or common technique, such as a technique of forming a plastic foam using a blowing agent.

The foam layer of the double-coated pressure-sensitive adhesive tape may have undergone a known surface treatment including chemical or physical surface treatments such as primer coating, corona discharge treatment, and plasma treatment. More specifically, the foam layer may have undergone a customary surface treatment including an oxidation treatment through a chemical or physical process, such as corona treatment, chromate treatment, exposure to ozone, exposure to flame, exposure to a high-voltage electric shock, and treatment with ionizing radiation; and a coating treatment with a primer or release agent. These treatments are performed for improving adhesion to an adjacent pressure-sensitive adhesive layer such as the surface pressure-sensitive adhesive layer providing the adhesive face, or the pressure-sensitive adhesive layer for fixing between the foam layer and the reinforcing layer in the double-coated pressure-sensitive adhesive tape.

The foam layer may contain additives according to necessity. Exemplary additives include fillers (e.g., inorganic fillers and organic fillers), age inhibitors, antioxidants, ultraviolet absorbers, antistatic agents, lubricants, plasticizers, flame retardants, and surfactants.

The foam layer is preferably a halogen-free foam layer which contains substantially no halogen compound by design. This is for the purpose of avoiding corrosion of metals. When the double-coated pressure-sensitive adhesive tape is used for fixing electric/electronic parts, adverse effects due to the presence of halogen compounds should be avoided. Such halogen compounds are generally incorporated into the foam layer as halogen-containing flame retardants and/or halogen-containing plasticizers.

The foam layer may be colored so as to allow the double-coated pressure-sensitive adhesive tape to develop graphical design functions and/or optical properties such as light blocking properties or light reflecting properties.

Typically, when the double-coated pressure-sensitive adhesive tape is used for a light blocking purpose, the foam (layer) has a visible light transmittance of preferably 15% or less (e.g., 0% to 15%), and more preferably 10% or less (e.g., 0% to 10%) as with the visible light transmittance of the double-coated pressure-sensitive adhesive tape.

When the double-coated pressure-sensitive adhesive tape is used for light reflecting, the foam (layer) has a visible-light reflectance of preferably 20% or more (e.g., 20% to 100%), and more preferably 25% or more (e.g., 25% to 100%) as with the visible-light reflectance of the double-coated pressure-sensitive adhesive tape.

The foam layer may be colored using one or more colorants. Each of different colorants may be used alone or in combination.

The foam layer may be colored black when the double-coated pressure-sensitive adhesive tape is used for light blocking. When colored black, the lightness $L^*$ specified according to the ($L^*a^*b^*$) color space is preferably 35 or less (from 0 to 35), and more preferably 30 or less (from 0 to 30). The redness-greenness a* and yellowness-blueness $b^*$ specified according to the (L*a*b*) color space can each be suitably set according to the lightness L*. The redness-greenness $a^*$ and yellowness-blueness $b^*$ both preferably range, for example, from -10 to 10, more preferably -5 to 5, and furthermore preferably 0 or approximately 0 (from -2.5 to 2.5) .

The lightness L*, redness-greenness a*, and yellowness-blueness b* specified according to the ($L^*a^*b^*$) color space are determined herein through the measurement with a colorimeter (trade name "CR-200" supplied by Konica Minolta Sensing Inc.) . As used herein "the ($L^*a^*b^*$) color space" is a color space specified and recommended by The International Commission on Illumination (CIE) in 1976 and is also called CIE 1976 ($L^*a^*b^*$) color space or CIELAB. In Japanese Industrial Standards (JIS), the ($L^*a^*b^*$) color space is prescribed in JIS Z 8729.

Exemplary black colorants for coloring the foam layer black include carbon blacks (e.g., furnace black, channel black, acetylene black, thermal black, and lampblack), graphite, copper oxide, manganese dioxide, aniline black, perylene black, titanium black, cyanine black, activated carbon, ferrites (e.g., non-magnetic ferrite and magnetic ferrite), magnetite, chromium oxide, iron oxide, molybdenum disulfide, chromium complexes, multicomponent oxide-based black colorants, and anthraquinone-based organic black colorants. Among them, carbon blacks are preferred, because they are available easily and inexpensively.

The amount of black colorants is not limited and may be such an amount as to allow the double-coated pressure-sensitive adhesive tape to have desired optical properties.

Independently, the foam layer may be colored white when the double-coated pressure-sensitive adhesive tape is used for a light reflecting purpose. When colored white, the lightness L* specified according to the (L*a*b*) color space is preferably 87 or more (from 87 to 100), and more preferably 90 or more (from 90 to 100). The redness-greenness a* and yellowness-blueness b* specified according to the (L*a*b*) color space can each be suitably set according to the lightness L*. The redness-greenness a* and yellowness-blueness b* both preferably range, for example, from -10 to 10, more preferably -5 to 5, and furthermore preferably 0 or approximately 0 (from -2.5 to 2.5).

Exemplary white colorants for coloring white include inorganic white colorants such as titanium oxides (e.g., titanium dioxides such as rutile titanium dioxide and anatase titanium dioxide), zinc oxide, aluminum oxide, silicon oxide, zirconium oxide, magnesium oxide, calcium oxide, tin oxide, barium oxide, cesium oxide, yttrium oxide, magnesium carbonate, calcium carbonates (precipitated calcium carbonate and heavy calcium carbonate), barium carbonate, zinc carbonate, aluminum hydroxide, calcium hydroxide, magnesium hydroxide, zinc hydroxide, aluminum silicate, magnesium silicate, calcium silicate, barium sulfate, calcium sulfate, barium stearate, zinc white, zinc sulfide, talc, silica, alumina, clay, kaolin, titanium phosphate, mica, gypsum, white carbon, diatomaceous earth, bentonite, lithopone, zeolite, sericite, and hydrated halloysite; and organic white colorants such as acrylic resin particles, styrenic resin particles, urethane resin particles, amide resin particles, carbonate resin particles, silicone resin particles, urea-formaldehyde resin particles, and melamine resin particles.

The amount of white colorants is not limited and may be such an amount as to allow the double-coated pressure-sensitive adhesive tape to have desired optical properties.

The foam layer of the double-coated pressure-sensitive adhesive tape has an expansion ratio of typically 1.5 to 30 cc/g and preferably 2.5 to 25.0 cc/g, for allowing the double-coated pressure-sensitive adhesive tape to be satisfactory in properties such as shock absorption, fittability to uneven or bumped portions, waterproofness, workability, and sealing performance. As used herein the "expansion ratio" of the foam layer is defined as the reciprocal of the apparent density of the foam layer as measured according to the method prescribed in JIS K 6767.

The foam layer has an elongation of typically 100% to 600% and preferably 400% to 550% in a machine direction (MD), and an elongation of typically 100% to 500% and preferably 150% to 450% in a cross direction (CD), for allowing the double-coated pressure-sensitive adhesive tape to be satisfactory in properties such as shock absorption, fittability to uneven or bumped portions, waterproofness, workability, and sealing performance. The elongation of the foam layer is herein measured according to the method prescribed in JIS K 6767.

The foam layer has a tensile strength of typically 0.5 to 15 MPa and preferably 1.0 to 10.0 MPa in the machine direction and of typically 0.5 to 13.0 MPa and preferably 1.0 to 9.0 MPa in the cross direction, for allowing the double-coated pressure-sensitive adhesive tape to be satisfactory in properties such as shock absorption, fittability to uneven or bumped portions, waterproofness, workability, and sealing performance. The tensile strength of the foam layer is measured herein according to the method prescribed in JIS K 6767.

The foam layer has a compressive hardness in terms of compression load of preferably 5 to 150 kPa and more preferably 12 to 120 kPa, as measured by placing the foam layer in between flat plates and compressing the same by 25% of the initial thickness. The range is preferred from the standpoints of allowing the double-coated pressure-sensitive adhesive tape to be satisfactory in properties such as shock absorption, fittability to uneven or bumped portions, waterproofness, workability, and sealing performance. The compressive hardness of the foam layer is herein measured according to the method prescribed in JIS K 6767.

The thickness of the foam layer of the double-coated pressure-sensitive adhesive tape may be chosen as appropriate according typically to the strength and flexibility of the foam layer, and intended use of the adhesive tape, as long as the double-coated pressure-sensitive adhesive tape has a total thickness of not exceeding 500 $\mu$m. The thickness is typically 50 to 480 $\mu$m, preferably 80 to 300 $\mu$m, and more preferably 100 to 200 $\mu$m. The foam layer, if having a thickness of less than 50 $\mu$m, may have through holes. In contrast, the foam layer, if having a thickness of more than 480 $\mu$m, may impede the development of sufficient adhesive properties of the double-coated pressure-sensitive adhesive tape.

Reinforcing Layer

The reinforcing layer of the double-coated pressure-sensitive adhesive tape is a non-foam layer containing no cell structure and is composed of a non-cellular structure unlike the foam layer. The reinforcing layer is a layer which helps the double-coated pressure-sensitive adhesive tape to have higher removability.

The non-cellular structure constituting the reinforcing layer of the double-coated pressure-sensitive adhesive tape is preferably a sheet in the form of a thin article. Exemplary sheets include, but are not limited to, fibrous sheets such as cloths, nonwoven fabrics, felt, and nets; paper sheets such as paper of every kind; metallic sheets such as metallic foils and metal sheets; plastic sheets such as films and sheets of various resins; and laminates of them.

Exemplary materials or raw materials for the plastic sheets include polyesters [e.g., poly(ethylene terephthalate)s, poly(ethylene naphthalate)s, poly(butylene terephthalate)s, and poly(butylene naphthalate)s], polyolefins [e.g., polyethylenes, polypropylenes, and ethylene-propylene copolymers], poly(vinyl alcohol)s, poly(vinylidene chloride)s, poly(vinyl chloride)s, vinyl chloride-vinyl acetate copolymers, poly(vinyl acetate)s, polyamides, polyimides, celluloses, fluorocarbon resins, polyethers, styrenic resins (e.g., polystyrenes), polycarbonates, and poly(ether sulfone)s.

Where necessary, a base material for the reinforcing layer may be subjected to a customary surface treatment for improving the adhesion typically with a pressure-sensitive adhesive layer. Exemplary surface treatments include oxidation treatments through a chemical or physical process, such as chromate treatment, exposure to ozone, exposure to flame, exposure to a high-voltage electric shock, and treatment with ionizing radiation

Though not critical, the reinforcing layer of the double-coated pressure-sensitive adhesive tape has a thickness of preferably 2 to 250 $\mu$m and more preferably 4 to 25 $\mu$m, for allowing the double-coated pressure-sensitive adhesive tape to be satisfactory in properties such as removability, shock absorption, fittability to uneven or bumped portions, waterproofness, workability, and sealing performance.

Surface Pressure-Sensitive Adhesive Layers

At least one of the two surface pressure-sensitive adhesive layers of the double-coated pressure-sensitive adhesive tape is formed from a pressure-sensitive adhesive composition containing an acrylic polymer, a tackifier resin, and a crosslinking agent, which acrylic polymer includes monomer units of an alkyl (meth)acrylate whose alkyl moiety being a linear or branched-chain alkyl group having 4 to 9 carbon atoms as an essential monomer component. The two surface pressure-sensitive adhesive layers may be formed from pressure-sensitive adhesive compositions having an identical composition or may be formed from pressure-sensitive adhesive compositions having different compositions. As used herein the term "pressure-sensitive adhesive composition" also means and includes a "composition for the formation of a pressure-sensitive adhesive."

In a typically preferred embodiment of the double-coated pressure-sensitive adhesive tapes, the reinforcing-layer-side surface pressure-sensitive adhesive layer is formed from a pressure-sensitive adhesive composition containing an acrylic polymer, a tackifier resin, and a crosslinking agent, which acrylic polymer includes monomer units of an alkyl (meth)acrylate whose alkyl moiety being a linear or branched-chain alkyl group having 4 to 9 carbon atoms as an essential monomer component. This is because, when a member (part or component) is fixed to a target work (e.g., container, cabinet, or product) at a desired position through the double-coated pressure-sensitive adhesive tape, it is preferred to apply the reinforcing-layer-side adhesive face to the member, and to apply the foam-layer-side adhesive face to the target work; and the reinforcing-layer-side surface pressure-sensitive adhesive layer should therefore particularly have satisfactory removability.

The content of the acrylic polymer including monomer units of an alkyl (meth)acrylate whose alkyl moiety being a linear or branched-chain alkyl group having 4 to 9 carbon atoms as an essential monomer component (this acrylic polymer is hereinafter also simply referred to as "acrylic polymer") in the pressure-sensitive adhesive composition is preferably 50 percent by weight or more (e.g., 50 to 95 percent by weight) and more preferably 70 percent by weight or more (e.g., 70 to 85 percent by weight) based on the total weight of solids in the composition.

The acrylic polymer is a polymer (or copolymer) prepared through polymerization of an alkyl (meth)acrylate whose alkyl moiety being a linear or branched-chain alkyl group having 4 to 9 carbon atoms as an essential monomer component or, where necessary, through copolymerization of the alkyl (meth) acrylate with a copolymerizable monomer copolymerizable with the alkyl (meth) acrylate.

Exemplary alkyl (meth)acrylate whose alkyl moiety being a linear or branched-chain alkyl group having 4 to 9 carbon atoms include butyl (meth) acrylates, isobutyl (meth)acrylates, s-butyl (meth)acrylates, t-butyl (meth) acrylates, pentyl (meth)acrylates, isopentyl (meth) acrylates, hexyl (meth)acrylates, heptyl (meth)acrylates, octyl (meth)acrylates, 2-ethylhexyl (meth)acrylates, isooctyl (meth) acrylates, nonyl (meth) acrylates, and isononyl (meth)acrylates. Each of different alkyl (meth)acrylates may be used alone or in combination.

Of the alkyl (meth) acrylates whose alkyl moiety being a linear or branched-chain alkyl group having 4 to 9 carbon atoms, butyl acrylate (BA) and 2-ethylhexyl acrylate (2EHA) are preferred for better adhesiveness at low temperatures and adhesiveness to rough surfaces. Specifically, exemplary acrylic polymers include a polymer including monomer units of one of butyl acrylate and 2-ethylhexyl acrylate as an essential monomer component; and a polymer including monomer units of both butyl acrylate and 2-ethylhexyl acrylate as essential monomer components. When the acrylic polymer is a polymer including monomer units of both butyl acrylate and 2-ethylhexyl acrylate as essential monomer components, the content of butyl acrylate is preferably 50 percent by weight or more based on the total amount (total weight) of butyl acrylate and 2-ethylhexyl acrylate.

The alkyl (meth)acrylate whose alkyl moiety being a linear or branched-chain alkyl group having 4 to 9 carbon atoms serves as a main monomer component for constituting the acrylic polymer, and the amount thereof is typically preferably 80 percent by weight or more (e.g., 80 to 99.9 percent by weight), more preferably 85 percent by weight or more (e.g., 85 to 98 percent by weight), and furthermore preferably 90 percent by weight or more (e.g., 90 to 95 percent by weight), based on the total amount of monomer components constituting the acrylic polymer.

The acrylic polymer may include monomer units of copolymerizable monomers, such as polar-group-containing monomers and multifunctional monomers, as constitutive monomer components as described above. The acrylic polymer, when including monomer units of such copolymerizable monomers as monomer components, may help the surface pressure-sensitive adhesive layers to have higher bond strength to an adherend or may help the surface pressure-sensitive adhesive layers to have higher cohesive strength. Each of different copolymerizable monomers may be used alone or in combination.

Examples of the polar-group-containing monomers include carboxyl-containing monomers such as (meth) acrylic acids, itaconic acid, maleic acid, fumaric acid, crotonic acid, and isocrotonic acid, and anhydrides of them, such as maleic anhydride; hydroxyl-containing monomers including hydroxylalkyl (meth)acrylates such as hydroxyethyl (meth) acrylates, hydroxypropyl (meth)acrylates, and hydroxybutyl (meth)acrylates; amido-containing monomers such as acrylamide, methacrylamide, N,N-dimethyl (meth) acrylamides, N-methylol (meth) acrylamides, N-methoxymethyl(meth) acrylamides, and N-butoxymethyl (meth) acrylamides; amino-containing monomers such as aminoethyl (meth)acrylates, dimethylaminoethyl (meth)acrylates, and t-butylaminoethyl (meth)acrylates; glycidyl-containing monomers such as glycidyl (meth)acrylates and methylglycidyl (meth)acrylates; cyano-containing monomers such as acrylonitrile and methacrylonitrile; heterocycle-containing vinyl monomers such as N-vinyl-2-pyrrolidone, (meth)acryloylmorpholines, N-vinylpyridine, N-vinylpiperidone, N-vinylpyrimidine, N-vinylpiperazine, N-vinylpyrrole, N-vinylimidazole, and N-vinyloxazole; alkoxyalkyl (meth)acrylate monomers such as methoxyethyl (meth)acrylates and ethoxyethyl (meth)acrylates;

sulfo-containing monomers such as sodium vinylsulfonate; phosphate-containing monomers such as 2-hydroxyethylacryloyl phosphate; imido-containing monomers such as cyclohexylmaleimide and isopropylmaleimide; and isocyanate-containing monomers such as 2-methacryloyloxyethyl isocyanate. Of the polar-group-containing monomers for use in the double-coated pressure-sensitive adhesive tapes, carboxyl-containing monomers or anhydrides of them, and hydroxyl-containing monomers are preferred, of which acrylic acid and hydroxyethyl acrylate are more preferred, for suppressing adhesive deposit on the adherend after peeling, and for easier peeling (higher removability) from the adherend.

In a particularly preferred embodiment of the double-coated pressure-sensitive adhesive tapes, the acrylic polymer, when including monomer units of one or more polar-group-containing monomers as constitutive monomer components, includes monomer units of both a hydroxyl-containing monomer and a carboxyl-containing monomer or an anhydride thereof. This is preferred for suppressing adhesive deposit on the adherend after peeling, and for easier peeling (higher removability) from the adherend.

Though not critical, the amount of polar-group-containing monomers is preferably 15 percent by weight or less (e.g., 0.01 to 15 percent by weight), more preferably 10 percent by weight or less (e.g., 0.1 to 10 percent by weight), furthermore preferably 5 percent by weight or less (e.g., 0.1 to 5 percent by weight), and still more preferably 3 percent by weight or less (e.g., 0.1 to 3 percent by weight), based on the total amount of monomer components constituting the acrylic polymer. The range is preferred for good balance between the tackiness or adhesiveness of the adhesive face and the removability.

Examples of the multifunctional monomers include hexanediol di (meth) acrylates, butanediol di (meth) acrylates, (poly)ethylene glycol di(meth)acrylates, (poly) propylene glycol di(meth)acrylates, neopentyl glycol di(meth)acrylates, pentaerythritol di (meth) acrylates, pentaerythritol tri (meth) acrylates, dipentaerythritol hexa (meth)acrylates, trimethylolpropane tri(meth)acrylates, tetramethylolmethane tri(meth)acrylates, allyl (meth) acrylates, vinyl (meth) acrylates, divinylbenzene, epoxy acrylates, polyester acrylates, and urethane acrylates. The amount of multifunctional monomers is preferably 2 percent by weight or less (e.g., 0.01 to 2 percent by weight) and more preferably 0.02 to 1 percent by weight, based on the total amount of monomer components constituting the acrylic polymer. Multifunctional monomers, if present in an amount of more than 2 percent by weight, may cause the surface pressure-sensitive adhesive layers to have an excessively high cohesive strength to thereby have insufficient tackiness. Multifunctional monomers, if present in an excessively small amount (e.g., less than 0.01 percent by weight based on the total amount of monomer components constituting the acrylic polymer), may cause, for example, the surface pressure-sensitive adhesive layers to have an insufficient cohesive strength.

The acrylic polymer may further include monomer units of other constitutive copolymerizable monomer components than the polar-group-containing monomers and multifunctional monomers. Exemplary copolymerizable monomer components usable herein include vinyl esters such as vinyl acetate and vinyl propionate; aromatic vinyl compounds such as styrene and vinyltoluene; olefins or dienes, such as ethylene, butadiene, isoprene, and isobutylene; vinyl ethers such as vinyl alkyl ethers; and vinyl chloride. The acrylic polymer may further include monomer units of one or more (meth)acrylic acid esters having an alicyclic hydrocarbon group, such as cyclopentyl (meth) acrylates, cyclohexyl (meth) acrylates, and isobornyl (meth)acrylates, as monomer components.

The acrylic polymer may further include monomer units of, as constitutive copolymerizable monomer components, other alkyl (meth)acrylates than those mentioned above, and examples thereof include alkyl (meth)acrylates whose alkyl moiety being a linear or branched-chain alkyl group having 1 to 3 carbon atoms, such as methyl (meth) acrylates, ethyl (meth)acrylates, propyl (meth)acrylates, and isopropyl (meth)acrylates; and alkyl (meth)acrylates whose alkyl moiety being a linear or branched-chain alkyl group having 10 to 20 carbon atoms, such as decyl (meth) acrylates, isodecyl (meth)acrylates, undecyl (meth)acrylates, dodecyl (meth)acrylates, tridecyl (meth)acrylates, tetradecyl (meth) acrylates, pentadecyl (meth)acrylates, hexadecyl (meth) acrylates, heptadecyl (meth)acrylates, octadecyl (meth) acrylates, nonadecyl (meth) acrylates, and eicosyl (meth)acrylates.

In a preferred embodiment, the acrylic polymer includes monomer units of an alkyl (meth)acrylate whose alkyl moiety being a linear or branched-chain alkyl group having 4 to 9 carbon atoms, a carboxyl-containing monomer, and a hydroxyl-containing monomer as essential monomer components. This allows the double-coated pressure-sensitive adhesive tapes to more effectively exhibit both satisfactory adhesive properties and good removability in the adhesive faces.

Particularly when the pressure-sensitive adhesive composition contains, as an additive, an isocyanate crosslinking agent mentioned later, the acrylic polymer preferably includes monomer units of an alkyl (meth)acrylate whose alkyl moiety being a linear or branched-chain alkyl group having 4 to 9 carbon atoms, a carboxyl-containing monomer, and a hydroxyl-containing monomer as essential monomer components. This allows the double-coated pressure-sensitive adhesive tapes to exhibit adhesive properties and removability both at higher levels in the adhesive faces.

In the preferred embodiment, the acrylic polymer includes monomer units of an alkyl (meth)acrylate whose alkyl moiety being a linear or branched-chain alkyl group having 4 to 9 carbon atoms, a carboxyl-containing monomer, and a hydroxyl-containing monomer as essential monomer components. In a more preferred embodiment for obtaining the advantageous effects more satisfactorily, the acrylic polymer includes monomer units of : 80 to 99.9 percent by weight of the alkyl (meth)acrylate whose alkyl moiety being a linear or branched-chain alkyl group having 4 to 9 carbon atoms; 0.1 to 10 percent by weight of the carboxyl-containing monomer; and 0.01 to 5 percent by weight of the hydroxyl-containing monomer, based on the total amount of monomer components constituting the acrylic polymer. In a furthermore preferred embodiment, the acrylic polymer includes monomer units of: 85 to 95 percent by weight of the alkyl (meth) acrylate whose alkyl moiety being a linear or branched-chain alkyl group having 4 to 9 carbon atoms; 0.1 to 5 percent by weight of the carboxyl-containing monomer; and 0.05 to 3 percent by weight of the hydroxyl-containing monomer, based on the total amount of monomer components constituting the acrylic polymer.

The acrylic polymer is prepared by polymerizing the monomer component(s) according to a known or customary polymerization process. Exemplary polymerization processes for the acrylic polymer include solution polymerization, emulsion polymerization, bulk polymerization, and polymerization through the application of active energy rays (active energy ray polymerization). Among them, solution polymerization and active energy ray polymerization are preferred, of which solution polymerization is more preferred, from the standpoints typically of transparency, water resistance, and cost of the acrylic polymer.

The solution polymerization may be performed using any of regular solvents. Exemplary solvents herein are organic solvents including esters such as ethyl acetate and n-butyl acetate; aromatic hydrocarbons such as toluene and benzene; aliphatic hydrocarbons such as n-hexane and n-heptane; alicyclic hydrocarbons such as cyclohexane and methylcyclohexane; and ketones such as methyl ethyl ketone and methyl isobutyl ketone. Each of different solvents may be used alone or in combination.

The polymerization of the acrylic polymer may be performed with one or more polymerization initiators which may be chosen as appropriate from known or customary polymerization initiators. Exemplary polymerization initiators include azo polymerization initiators such as 2,2'-azobisisobutyronitrile, 2,2'-azobis (4-methoxy-2,4-dimethylvaleronitrile), 2,2'-azobis (2,4-dimethylvaleronitrile), 2,2'-azabis (2-methylbutyronitrile), 1,1'-azabis (cyclohexane-1-carbonitrile), 2,2' -azabis (2,4,4-trimethylpentane), and dimethyl 2,2' -azabis (2-methylpropionate); peroxide polymerization initiators such as benzoyl peroxide, t-butyl hydroperoxide, di-t-butyl peroxide, t-butyl peroxybenzoate, dicumyl peroxide, 1,1-bis (t-butylperoxy) -3,3,5-trimethylcyclohexane, and 1,1-bis (t-butylperoxy) cyclododecane; and other oil-soluble polymerization initiators. Each of different polymerization initiators may be used alone or in combination. The amount of polymerization initiators is not critical and may be such a customary amount that they are usable as polymerization initiators.

Examples of the crosslinking agent to be contained in the pressure-sensitive adhesive composition for the formation of the surface pressure-sensitive adhesive layers of the double-coated pressure-sensitive adhesive tape include, but are not limited to, isocyanate crosslinking agents, epoxy crosslinking agents, melamine crosslinking agents, peroxide crosslinking agents, as well as urea crosslinking agents, metal alkoxide crosslinking agents, metal chelate crosslinking agents, metal salt crosslinking agents, carbodiimide crosslinking agents, oxazoline crosslinking agents, aziridine crosslinking agents, and amine crosslinking agents. For higher anchoring properties and for preventing cohesive failure of the pressure-sensitive adhesive layer(s), such crosslinking agents are contained in the pressure-sensitive adhesive composition for the formation of the surface pressure-sensitive adhesive layers of the double-coated pressure-sensitive adhesive tape. Each of different crosslinking agents may be used alone or in combination.

Among them, isocyanate crosslinking agents are preferred for crosslinking the acrylic polymer contained in the surface pressure-sensitive adhesive layers to thereby allow the pressure-sensitive adhesive layer(s) to exhibit further higher cohesive strength and to exhibit both adhesive properties and removability in further satisfactory balance in the adhesive faces.

Exemplary isocyanate crosslinking agents (multifunctional isocyanate compounds) include lower aliphatic polyisocyanates such as 1,2-ethylene diisocyanate, 1,4-butylene diisocyanate, and 1,6-hexamethylene diisocyanate; alicyclic polyisocyanates such as cyclopentylene diisocyanate, cyclohexylene diisocyanate, isophorone diisocyanate, hydrogenated tolylene diisocyanate, and hydrogenated xylene diisocyanate; and aromatic polyisocyanates such as 2,4-tolylene diisocyanate, 2,6-tolylene diisocyanate, 4,4'-diphenylmethane diisocyanate, and xylylene diisocyanate. Exemplary isocyanate crosslinking agents further include a trimethylolpropane/tolylene diisocyanate adduct [supplied by Nippon Polyurethane Industry Co., Ltd. under the trade name "CORONATE L"], and a trimethylolpropane/hexamethylene diisocyanate adduct [supplied by Nippon Polyurethane Industry Co., Ltd. under the trade name "CORONATE HL" ]. The pressure-sensitive adhesive composition for the formation of the surface pressure-sensitive adhesive layers of the double-coated pressure-sensitive adhesive tape, when containing an isocyanate crosslinking agent, preferably contains an acrylic polymer obtained through copolymerization of monomer components including a hydroxyl-containing monomer as a copolymerizable monomer.

Though not critical, the content of crosslinking agents in the pressure-sensitive adhesive composition is preferably 0.001 to 10 parts by weight, more preferably 0.01 to 7 parts by weight, and furthermore preferably 0.1 to 5 parts by weight, per 100 parts by weight of the acrylic polymer. The range is preferred for crosslinking the acrylic polymer to allow the pressure-sensitive adhesive layer to have further higher cohesive strength and to exhibit adhesive properties and removability in furthermore satisfactory balance in the adhesive faces.

Examples of the tackifier resin (tackifier) to be contained in the pressure-sensitive adhesive composition for the formation of the surface pressure-sensitive adhesive layers of the double-coated pressure-sensitive adhesive tape include, but are not limited to, terpene tackifier resins, phenol tackifier resins, rosin tackifier resins, and petroleum tackifier resins. The presence of the tackifier resin in the pressure-sensitive adhesive composition for the formation of the surface pressure-sensitive adhesive layers of the double-coated pressure-sensitive adhesive tape may protect the pressure-sensitive adhesive layers from cohesive failure while maintaining suitable adhesive properties thereof. This is because the cohesive failure of the pressure-sensitive adhesive layers, if occurring, may cause problems such that the pressure-sensitive adhesive layer remains on the adherend when the double-coated pressure-sensitive adhesive tape is once affixed to the adherend and then removed therefrom, thus adversely affecting the removability. Each of different tackifier resins may be used alone or in combination.

Examples of the terpene tackifier resins include terpene resins such as $\alpha$-pinene polymers, $\beta$-pinene polymers, and dipentene polymers; and modified terpene resins such as terpene-phenol resins, styrene-modified terpene resins, aromatic-modified terpene resins, and hydrogenated terpene resins, which modified terpene resins are derived from such terpene resins through modification (e.g., phenol modification, aromatic modification, hydrogenation modification, or hydrocarbon modification).

Exemplary phenol tackifier resins include condensates of formaldehyde and any of phenols (e.g., phenol, m-cresol, 3,5-xylenol, p-alkylphenols, and resorcinol), such as alkylphenol resins and xylene-formaldehyde resins; resols prepared by an addition reaction of any of the phenols with formaldehyde by the catalysis of an alkali (base) catalyst; novolacs prepared by a condensation reaction of any of the phenols with formaldehyde by the catalysis of an acid catalyst; and rosin-modified phenol resins prepared by adding phenol to any of rosins (e.g., unmodified rosins, modified rosins, and rosin derivatives) by the catalysis of an acid catalyst and carrying out thermal polymerization.

Exemplary rosin tackifier resins include unmodified rosins (crude rosins) such as gum rosin, wood rosin, and tall oil rosin; modified rosins prepared from these unmodified rosins by modification typically through hydrogenation, disproportionation, or polymerization, such as hydrogenated rosins, disproportionated rosins, polymerized rosins, and other chemically modified rosins; and a variety of rosin derivatives. The rosin derivatives include, for example, rosin esters such as rosin ester compounds obtained from unmodified rosins through esterification with alcohols, and modified rosin ester compounds obtained from modified rosins (e.g., hydrogenated rosins, disproportionated rosins, and polymerized rosins) through esterification with alcohols; unsaturated-fatty-acid-modified rosins obtained from unmodified rosins or modified rosins (e.g., hydrogenated rosins, disproportionated rosins, and polymerized rosins) through modification with unsaturated fatty acids; unsaturated-fatty-acid-modified rosin esters obtained from rosin esters through modification with unsaturated fatty acids; rosin alcohols obtained from unmodified rosins, modified rosins (e.g., hydrogenated rosins, disproportionated rosins, and polymerized rosins), unsaturated-fatty-acid-modified rosins, or unsaturated-fatty-acid-modified rosin esters through reduction of carboxyl groups therein; and metal salts of rosins such as unmodified rosins, modified rosins, and rosin derivatives (of which metal salts of rosin esters are preferred).

Examples of the petroleum tackifier resins usable herein include known petroleum resins such as aromatic petroleum resins, aliphatic petroleum resins, alicyclic petroleum resins (aliphatic cyclic petroleum resins), aliphatic/aromatic petroleum resins, aliphatic/alicyclic petroleum resins, hydrogenated petroleum resins, coumarone resins, and coumarone-indene resins. Specifically, exemplary aromatic petroleum resins include polymers each using one or more vinyl-containing aromatic hydrocarbons having 8 to 10 carbon atoms, such as styrene, o-vinyltoluene, m-vinyltoluene, p-vinyltoluene, $\alpha$-methylstyrene, $\beta$-methylstyrene, indene, and methylindene. Of such aromatic petroleum resins, preferred are aromatic petroleum resins (so-called "C9 petroleum resins") derived from a fraction including vinyltoluene and indene (so-called "C9 petroleum fraction"). Exemplary aliphatic petroleum resins include polymers each using one or more of olefins and dienes having 4 or 5 carbon atoms, including olefins such as butene-1, isobutylene, and pentene-1; and dienes such as butadiene, piperylene (1, 3-pentadiene), and isoprene. Of such aliphatic petroleum resins, preferred are aliphatic petroleum resins (e.g., so-called "C4 petroleum resins" and "C5 petroleum resins") obtained from fractions including butadiene, piperylene, and isoprene (e.g., so-called "C4 petroleum fraction" and "C5 petroleum fraction"). Exemplary alicyclic petroleum resins include alicyclic hydrocarbon resins prepared by cyclizing and dimerizing aliphatic petroleum resins (e.g., so-called "C4 petroleum resins" and "C5 petroleum resins") and polymerizing the cyclized and dimerized products; polymers and hydrogenated products thereof, of cyclic diene compounds such as cyclopentadiene, dicyclopentadiene, ethylidenenorbornene, dipentene, ethylidenebicycloheptene, vinylcycloheptene, tetrahydroindene, vinylcyclohexene, and limonene; and alicyclic hydrocarbon resins obtained from the aromatic hydrocarbons resins or aliphatic/aromatic petroleum resins mentioned below through hydrogenation of their aromatic rings. Exemplary aliphatic/aromatic petroleum resins include styrene-olefin copolymers. Exemplary aliphatic/aromatic petroleum resins include so-called "C5/C9 copolymerized petroleum resins."

The tackifier resins are also available as commercial products such as one under the trade name "SUMILITERESIN PR-12603" from Sumitomo Bakelite Co., Ltd.; and one under the trade name "PENSEL D125" from Arakawa Chemical Industries, Ltd.

Of the tackifier resins, rosin tackifier resins are preferred, of which rosin esters are more preferred for providing adhesive properties and removability both at higher levels in the adhesive faces.

Of such tackifier resins, those having a softening point of 80°C to 180°C are preferred, and those having a softening point of 85°C to 160°C are more preferred for providing adhesive properties and removability both at higher levels in the adhesive faces. More specifically, tackifier resins having a softening point of lower than 130°C (e.g., in the range of higher than 90°C and lower than 130°C) are particularly preferred. Accordingly, polymerized rosin esters having a softening point of lower than 130°C are furthermore preferred.

The "softening point" of a tackifier resin is herein defined as a value measured according to a ball and ring method (e.g., the ball and ring method prescribed in JIS K 5902) .

Though not critical, the content of tackifier resins in the pressure-sensitive adhesive composition is preferably 5 to 50 parts by weight and more preferably 10 to 45 parts by weight per 100 parts by weight of the acrylic polymer, for providing both satisfactory adhesive properties and good removability.

The pressure-sensitive adhesive composition for the formation of the surface pressure-sensitive adhesive layers may further contain additives in addition to the acrylic polymer, crosslinking agent, and tackifier resin. Exemplary additives include plasticizer, fillers, age inhibitors, antioxidants, colorants (e.g., carbon black and other pigments; and dyestuffs), and cross-linking promoters (coagents) .

The pressure-sensitive adhesive composition may be prepared, for example, by mixing or blending an acrylic polymer, a crosslinking agent, and a tackifier resin with one another. Typically, the pressure-sensitive adhesive composition may be obtained by subjecting, to solution polymerization, a composition containing an alkyl (meth)acrylate whose alkyl moiety being a linear or branched-chain alkyl group having 4 to 9 carbon atoms to give a composition containing an acrylic polymer (e.g., a composition including the acrylic polymer and a solvent); and blending the prepared composition with the crosslinking agent and tackifier resin.

Though not limited, the surface pressure-sensitive adhesive layers of the double-coated pressure-sensitive adhesive tape may be formed, for example, by a method of applying the pressure-sensitive adhesive composition to a predetermined surface. This forming method may further employ one or more processes such as heating, drying, and irradiation with active energy rays (e.g., irradiation with ultraviolet ray) according to necessity.

The gel fractions of the surface pressure-sensitive adhesive layers of the double-coated pressure-sensitive adhesive tape are preferably 10 to 60 percent by weight, and more preferably 10 to 50 percent by weight, for providing adhesive properties and removability both at high levels. This range is preferred particularly for the gel fraction of the reinforcing-layer-side surface pressure-sensitive adhesive layer.

The gel fraction may be determined as a content of insoluble matter which is insoluble in ethyl acetate. Specifically, the gel fraction may be determined as a weight fraction by immersing a sample pressure-sensitive adhesive layer in ethyl acetate at 23°C for 7 days, weighing the insoluble matter, and calculating the weight fraction (in units of percent by weight) with respect to the sample weight before immersion.

More specifically, the gel fraction is a value as determined according to the following "method for measuring gel fraction."

Method for Measuring Gel Fraction

About 0.1 g of a target surface pressure-sensitive adhesive layer of the double-coated pressure-sensitive adhesive tape is sampled, the sample is covered by a porous tetrafluoroethylene sheet (supplied by Nitto Denko Corporation under the trade name "NTF 1122") having an average pore size of 0.2 $\mu$m, tied with a kite string, the weight of the resulting article is measured, and this weight is defined as a "weight before immersion." The "weight before immersion" is the total weight of the pressure-sensitive adhesive layer, the tetrafluoroethylene sheet, and the kite string. Independently, the total weight of the tetrafluoroethylene sheet and the kite string is measured as a tare weight.

Next, the sampled pressure-sensitive adhesive layer covered by the tetrafluoroethylene sheet and tied with the kite string (the whole article is hereinafter also referred to as a "sample") is placed in a 50-ml vessel filled with ethyl acetate, and left stand at 23°C for 7 days. The sample after immersion in ethyl acetate is retrieved from the vessel, transferred into an aluminum cup, dried in a drier at 130°C for 2 hours to remove ethyl acetate, and the weight of the resulting sample is measured as a weight after immersion.

Then the gel fraction is calculated according to the following equation:

```
Gel fraction (percent by weight) = (A-B)/(C-B) x 100
```

wherein "A" represents the weight after immersion; "B" represents the tare weight; and "C" represents the weight before immersion.

The gel fraction may be controlled typically by the composition of monomer components constituting the acrylic polymer, the weight-average molecular weight of the acrylic polymer, and the content of the crosslinking agent, each in the pressure-sensitive adhesive composition.

The foam-layer-side surface pressure-sensitive adhesive layer in the double-coated pressure-sensitive adhesive tape may be, but is not limited to, a pressure-sensitive adhesive layer formed from a known or customary pressure-sensitive adhesive (self adhesive) as a component. Examples of such pressure-sensitive adhesives include, but are not limited to, known pressure-sensitive adhesives such as acrylic pressure-sensitive adhesives, rubber pressure-sensitive adhesives, vinyl alkyl ether pressure-sensitive adhesives, silicone pressure-sensitive adhesives, polyester pressure-sensitive adhesives, polyamide pressure-sensitive adhesives, urethane pressure-sensitive adhesives, fluorine pressure-sensitive adhesives, and epoxy pressure-sensitive adhesives. Each of such pressure-sensitive adhesives may be used alone or in combination. Pressure-sensitive adhesives for use herein may be pressure-sensitive adhesives in any form, such as emulsion pressure-sensitive adhesives, solvent pressure-sensitive adhesives, heat-fusible pressure-sensitive adhesives (hot-melt pressure-sensitive adhesives), and active-energy-ray-curable pressure-sensitive adhesives (of which ultraviolet-ray-curable pressure-sensitive adhesives are preferred). The foam-layer-side surface pressure-sensitive adhesive layer may further contain one or more suitable additives.

The foam-layer-side surface pressure-sensitive adhesive layer may be a pressure-sensitive adhesive layer having an identical or substantially identical composition to the reinforcing-layer-side surface pressure-sensitive adhesive layer. In a preferred embodiment for satisfactory productivity of the pressure-sensitive adhesive tape, the foam-layer-side surface pressure-sensitive adhesive layer and the reinforcing-layer-side surface pressure-sensitive adhesive layer are pressure-sensitive adhesive layers having an identical composition or substantially identical compositions to each other.

Though not critical as long as the total thickness of the double-coated pressure-sensitive adhesive tape does not exceed 500 $\mu$m, the thickness of one surface pressure-sensitive adhesive layer of the double-coated pressure-sensitive adhesive tape is preferably 2 to 140 $\mu$m, more preferably 20 to 100 $\mu$m, and furthermore preferably 20 to 75 $\mu$m for ensuring sufficient tackiness (adhesiveness) and satisfactory removability. The two surface pressure-sensitive adhesive layers of the double-coated pressure-sensitive adhesive tape may have thicknesses identical to or different from each other. Each of the surface pressure-sensitive adhesive layers may have a single-layer structure or multilayer structure.

In an embodiment, the double-coated pressure-sensitive adhesive tape structurally includes a foam layer; a pressure-sensitive adhesive layer on one side of the foam layer; a reinforcing layer above the other side of the foam layer with the interposition of a pressure-sensitive adhesive layer; and a pressure-sensitive adhesive layer on the reinforcing layer [laminate structure of (pressure-sensitive adhesive layer)/(foam layer)/(pressure-sensitive adhesive layer) / (reinforcing layer)/(pressure-sensitive adhesive layer); see Fig. 1]. In this embodiment, the reinforcing-layer-side pressure-sensitive adhesive layer has a thickness of preferably 2 to 140 $\mu$m and more preferably 20 to 100 $\mu$m; whereas the foam-layer-side pressure-sensitive adhesive layer has a thickness of preferably 2 to 140 $\mu$m and more preferably 20 to 100 $\mu$m.

Other Layers

In an embodiment, the double-coated pressure-sensitive adhesive tape further includes one or more other layers (hereinafter also referred to as "additional layers") such as intermediate layers and undercoat layers, unless adversely affecting the advantageous effects of the present invention. In another embodiment, the double-coated pressure-sensitive adhesive tape includes a pressure-sensitive adhesive layer between the reinforcing layer and the foam layer for fixing the reinforcing layer and the foam layer. This pressure-sensitive adhesive layer may be a known pressure-sensitive adhesive layer or a pressure-sensitive adhesive layer having an identical composition to that of the surface pressure-sensitive adhesive layers. In these embodiments, the thickness(es) of the additional layer (s) is also included in the "total thickness of the double-coated pressure-sensitive adhesive tape," because the "total thickness of the double-coated pressure-sensitive adhesive tape" herein refers to the thickness from one adhesive face to the other adhesive face of the adhesive tape.

Release Liner

The adhesive faces of the double-coated pressure-sensitive adhesive tape may be protected by a release liner (separator) before use. In this case, the two adhesive faces of the double-coated pressure-sensitive adhesive tape may be protected by two release liners respectively; or the double-coated pressure-sensitive adhesive tape may be wound into a roll so that the two adhesive faces are protected by one release liner having release surfaces on both sides. The release liner (s) is used as a protective material for the pressure-sensitive adhesive layers and is removed on or before the application of the double-coated pressure-sensitive adhesive tape to the adherends. The thickness(es) of release liner(s), if used, is not included in the "total thickness of the double-coated pressure-sensitive adhesive tape."

Release liners for use herein may be, but not limited to, common release papers, and specific examples thereof include bases having a releasably treated layer; bases containing a fluorocarbon polymer and having low adhesiveness; and bases containing a non-polar polymer and having low adhesiveness. Exemplary bases having a releasably treated layer include plastic films and papers whose surface having been treated with a release agent. Exemplary release agents include silicone release agents, long-chain alkyl release agents, fluorine-containing release agents, and molybdenum sulfide release agents. Exemplary fluorocarbon polymers for constituting the bases containing a fluorocarbon polymer and having low adhesiveness include polytetrafluoroethylenes, polychlorotrifluoroethylenes, poly(vinyl fluoride)s, poly(vinylidene fluoride)s, tetrafluoroethylene-hexafluoropropylene copolymers, and chlorofluoroethylene-vinylidene fluoride copolymers. Exemplary non-polar polymers for constituting the bases containing a non-polar polymer and having low adhesiveness include olefinic resins such as polyethylenes and polypropylenes. The release liners can be formed according to a known or common procedure. The thicknesses and other parameters or properties of the release liners are not critical.

Double-Coated Pressure-Sensitive Adhesive Tapes

In a preferred embodiment of the double-coated pressure-sensitive adhesive tape, at least one adhesive face (particularly the reinforcing-layer-side adhesive face) does not suffer from adhesive deposit (adhesive residue, adhesive remains) in the following removability evaluation test:

Removability evaluation test: the double-coated pressure-sensitive adhesive tape (10 mm in width and 100 mm in length) is affixed to a glass plate (trade name "Slide Glass Hakuenma No. 1" supplied by Matsunami Glass Ind., Ltd.), left stand in an atmospheric temperature of 23°C and relative humidity of 50% for 30 minutes, then peeled off from the glass plate at a peel angle of 180 degrees and a tensile speed of 5 m/min, and thereafter whether the adhesive remains on the surface of the glass plate is visually observed.

When the double-coated pressure-sensitive adhesive tape according to the above embodiment is applied to an adherend and then peeled off therefrom, the adhesive face less causes adhesive deposit and contamination of the adherend.

In general, the behavior (behavior in removable) of a double-coated pressure-sensitive adhesive tape upon removal (peeling) of the adhesive tape from the adherend is involved in a peeling phenomenon at high speed. In the peeling at high speed (high-speed peeling; peeling typically performed at a tensile speed of 5 m/min or 10 m/min), the adhesive tape should have satisfactory removability. The double-coated pressure-sensitive adhesive tape according to the present invention should be peeled in interfacial peeling in which the adherend and the double-coated pressure-sensitive adhesive tape are separated at the interface between them. In addition, the peeling should proceed while avoiding or suppressing problems such as delamination between the foam layer and the pressure-sensitive adhesive layer, failure of the foam layer, and interlayer fracture due to the cleavage of the foam layer.

For these reasons, the double-coated pressure-sensitive adhesive tape, in at least one adhesive face (particularly in the reinforcing-layer-side adhesive face), preferably has a 180-degree peel strength with respect to an adherend of 15 N/10 mm or less (under peeling conditions of 23°C, 50% relative humidity, a tensile speed of 5 m/min, and a peel angle of 180 degrees). This is because the adhesive tape may exhibit satisfactory removability while effectively suppressing or avoiding such a problem that the adherend and the double-coated pressure-sensitive adhesive tape fail to separate from each other in the form of interfacial peeling at the interface between them, and suppressing the occurrence of problems such as delamination between the foam layer and the pressure-sensitive adhesive layer, failure of the foam layer, and interlayer fracture due to the cleavage of the foam layer. The 180-degree peel strength is also referred to as a high-speed peel force. The high-speed peel force is an adhesive strength as measured by peeling off the adhesive tape from the adherend under high-speed peeling conditions (under conditions of 23°C, 50% relative humidity, a tensile speed of 5 m/min, and a peel angle of 180 degrees). The high-speed peel force of the adhesive face is more preferably 10 N/10 mm or less (e.g., 2 to 10 N/10 mm) for obtaining further satisfactory removability.

In a preferred embodiment, the double-coated pressure-sensitive adhesive tape has, in at least one adhesive face (particularly in the reinforcing-layer-side adhesive face), a 180-degree peel strength of 15 N/10 mm or less (under peeling conditions of 23°C, 50% relative humidity, a tensile speed of 5 m/min, and a peel angle of 180 degrees with respect to a glass plate). The double-coated pressure-sensitive adhesive tape exhibits satisfactory removability with respect to the adherend glass plate without suffering from such a problem that the adhesive tape does not undergo interfacial peeling at the interface between the glass plate and the double-coated pressure-sensitive adhesive tape and without suffering from problems such as delamination between the foam layer and the pressure-sensitive adhesive layer, failure of the foam layer, and interlayer fracture due to the cleavage of the foam layer.

The double-coated pressure-sensitive adhesive tape according to the embodiment also has, in at least one adhesive face (particularly in the reinforcing-layer-side adhesive face), a high-speed peel force of 15 N/10 mm or less even with respect to other adherends than the glass plate, such as metallic plates such as stainless steel sheets and aluminum plates; plastic films and plastic plates such as PET films and polycarbonate (PC) plates; and adherends as composites of these materials. The double-coated pressure-sensitive adhesive tape therefore exhibits satisfactory removability also with respect to these adherends.

The double-coated pressure-sensitive adhesive tape has the above-mentioned configuration in at least one adhesive face (particularly in the reinforcing-layer-side adhesive face) and thereby excels in removability.

In a preferred embodiment, the double-coated pressure-sensitive adhesive tape, at least in the reinforcing-layer-side adhesive face, does not cause adhesive deposit in the removability evaluation test and has a 180-degree peel strength of 15 N/10 mm or less (under peeling conditions of 23°C, 50% relative humidity, a tensile speed of 5 m/min, and a peel angle of 180 degrees with respect to a glass plate). This is because, when a member (part or component) is fixed or applied to a target work (e.g., container, cabinet, or product) at a desired position through the double-coated pressure-sensitive adhesive tape, it is preferred for providing satisfactory removability to apply the reinforcing-layer-side adhesive face to the member and to apply the foam-layer-side adhesive face to the target work.

It is enough for the double-coated pressure-sensitive adhesive tape according to one embodiment of the present invention to have a 180-degree peel strength of 15 N/10 mm or less (under peeling conditions of 23°C, 50% relative humidity, a tensile speed of 5 m/min, and a peel angle of 180 degrees with respect to a glass plate) and to not cause adhesive deposit in the removability evaluation test, in at least one adhesive face (particularly in the reinforcing-layer-side adhesive face). The double-coated pressure-sensitive adhesive tape is therefore not limited in its surface pressure-sensitive adhesive layers, as long as the adhesive tape satisfies the above conditions. The surface pressure-sensitive adhesive layers may each be a pressure-sensitive adhesive layer other than the pressure-sensitive adhesive layer formed from a pressure-sensitive adhesive composition containing an acrylic polymer, a tackifier resin, and a crosslinking agent, which acrylic polymer includes monomer units of an alkyl (meth)acrylate whose alkyl moiety being a linear or branched-chain alkyl group having 4 to 9 carbon atoms as an essential monomer component.

In general, the behavior of a double-coated pressure-sensitive adhesive tape in bonding to an adherend and the behavior thereof in holding the adherend are involved in a peeling phenomenon at low speed. In the peeling at low speed (low-speed peeling; for example, peeling at a tensile speed of 300 mm/minute), the double-coated pressure-sensitive adhesive tape should exhibit sufficient bonding reliability and should have such a sufficient bond strength as not to be peeled off from the adherend during use of the double-coated pressure-sensitive adhesive tape. An adhesive face, if having a peel force of 2.5 N/10 mm or less in low-speed peeling from the adherend, may not exhibit a sufficient bond strength.

For these reasons, the double-coated pressure-sensitive adhesive tape has a 180-degree peel strength of preferably 2.5 N/10 mm or more (e.g., 2.5 to 15 N/10 mm), and more preferably 5.0 N/10 mm or more (e.g., 5.0 to 14 N/10 mm) (under peeling conditions of 23°C, 50% relative humidity, a tensile speed of 300 mm/minute, and a peel angle of 180 degrees) in at least one adhesive face (particularly in the reinforcing-layer-side adhesive face). The 180-degree peel strength herein is also referred to as a low-speed peel force. Specifically, the low-speed peel force is an adhesive strength measured under low-speed peeling conditions (conditions of 23°C, 50% relative humidity, a tensile speed of 300 mm/minute, and a peel angle of 180 degrees).

The double-coated pressure-sensitive adhesive tape has the property of not causing adhesive deposit in the removability evaluation test, the high-speed peel force, and the low-speed peel force in at least one adhesive face (particularly in the reinforcing-layer-side adhesive face) thereof within the above-specified conditions. These properties may be controlled by modifying conditions and parameters such as the monomer composition and weight-average molecular weight of the acrylic polymer contained in the surface pressure-sensitive adhesive layer; the types and amounts of the crosslinking agent and tackifier resin; and the gel fraction of the surface pressure-sensitive adhesive layer.

Though not critical, the compression load of the double-coated pressure-sensitive adhesive tape is typically preferably 0.1 to 300 kPa, and more preferably 0.1 to 250 kPa in terms of compression load upon compression by 20% of the initial thickness. This range is preferred from the viewpoints of shock absorption, fittability to uneven or bumped portions, waterproofness, workability, and sealing performance.

The compression load is defined according to the following equation:

$$\text{Compression load} = L/A$$

wherein "L" represents a load as measured by stacking ten plies of a sample double-coated pressure-sensitive adhesive tape to give an assembly, and compressing the assembly by a predetermined thickness with respect to the initial thickness of the assembly; and "A" represents the area of the sample double-coated pressure-sensitive adhesive tape.

The area of the double-coated pressure-sensitive adhesive tape herein is set to be 30 cm long and 30 cm wide.

The double-coated pressure-sensitive adhesive tape may have a compression load within the above range regardless of the material and thickness of the reinforcing layer, because the adhesive tape includes a foam layer. Typically, even when including a reinforcing layer of a hard material (e.g., the metal sheet or plastic sheet) as the reinforcing layer, the double-coated pressure-sensitive adhesive tape may have a compression load within the above range, because the adhesive tape simultaneously includes the foam layer.

The compression load of the double-coated pressure-sensitive adhesive tape may be adjusted by suitably choosing conditions and parameters such as the thicknesses and types of the foam layer, reinforcing layer, and pressure-sensitive adhesive layers; and the expansion ratio and cell structure of the foam layer.

The double-coated pressure-sensitive adhesive tape, when having a compression load within the above range, shows satisfactory fittability to uneven or bumped portions and improved sealing function (sealability).

Though not critical, the double-coated pressure-sensitive adhesive tape has a push out force of typically preferably 30 to 100 newtons (N) and more preferably 50 to 80 N, so as to prevent the separation of inner materials due to stress. The push out force herein is determined as a bond strength by arranging a sample double-coated pressure-sensitive adhesive tape between a polycarbonate plate and an acrylic plate; affixing them through compression bonding (contact bonding) under a compression load applied by one reciprocating motion of a 2-kg roller; and measuring a bond strength while pushing out the acrylic plate.

The double-coated pressure-sensitive adhesive tape may have a push out force within the above-specified range by adjusting parameters and conditions such as the thicknesses and types of the foam layer, reinforcing layer, and pressure-sensitive adhesive layers; and the expansion ratio of the foam layer.

The double-coated pressure-sensitive adhesive tape includes the foam layer, thereby varies little in push out force at each compression load, and ensures a sufficient push out force even when applied under a small compression load. Typically, the adhesive tape may ensure a push out force of about 80% to 90% of such a push out force as to ensure 100% adhesion area, even when the adhesive tape is affixed to adherends through compression bonding under a small compression load of 500 grams.

The double-coated pressure-sensitive adhesive tape therefore enables highly reliable bonding and excels in workability. Accordingly, the double-coated pressure-sensitive adhesive tape is advantageously usable to such adherends that the application of the adhesive tape through compression bonding under large compression loads is difficult. Examples of such adherends include fragile adherends, soft or flexible adherends, and adherends having non-flat (uneven) surfaces.

The push out force herein is determined in the following manner. A double-coated pressure-sensitive adhesive tape is shaped into a frame of 40 mm in outer width, 60 mm in outer length, and 1 mm in frame width, and the frame-shaped adhesive tape is arranged between a polycarbonate plate and an acrylic plate and affixed to them through compression bonding under a predetermined compression load to give a test specimen. The acrylic plate in the test specimen is then pushed in a thickness direction of the acrylic plate from the inside toward the outside at a speed of 10 mm/minute, and the maximum stress until the acrylic plate is separated from the polycarbonate plate is measured and defined as the push out force.

The double-coated pressure-sensitive adhesive tape, as including the foam layer, excels in drop impact resistance and, also for this reason, enables satisfactorily reliable bonding. The double-coated pressure-sensitive adhesive tape excels in drop impact resistance even at low temperatures (e.g., about -30°C to about 10°C) and even at high temperatures (e.g., about 30°C to about 50°C) because the foam layer absorbs the impact and thereby relaxes the stress.

The double-coated pressure-sensitive adhesive tape has a dielectric breakdown voltage (breakdown strength) of preferably 2 to 40 kV/mm, and more preferably 4 to 15 kV/mm.

The insulation quality of the double-coated pressure-sensitive adhesive tape may be easily controlled by choosing the material for the reinforcing layer, because the adhesive tape has the reinforcing layer in addition to the foam layer. When used typically for fixing electronic parts, the double-coated pressure-sensitive adhesive tape preferably has excellent insulation quality (is preferably highly insulative).

In an embodiment, the double-coated pressure-sensitive adhesive tape has controlled optical properties such as transmittance and reflectance, typically by coloring the foam layer.

For example, the double-coated pressure-sensitive adhesive tape, when used for light blocking, may have a visible-light transmittance of preferably 15% or less (e.g., 0% to 15%), and more preferably 10% or less (e.g., 0% to 10%) by coloring the foam layer and/or reinforcing layer black. The double-coated pressure-sensitive adhesive tape, when used for light reflecting, may have a visible-light reflectance of preferably 20% or more (e.g., 20% to 100%), and more preferably 25% or more (e.g., 25% to 100%) by coloring the foam layer and/or reinforcing layer white. Such double-coated pressure-sensitive adhesive tapes having controlled or modified optical properties are usable as or in optical members such as light diffusers, scattering element members (scatterers), and condensing members (condensators).

Double-coated pressure-sensitive adhesive tapes according to embodiments of the present invention may be prepared according to known or customary processes. They may be prepared, for example, by a step (i) of forming a pressure-sensitive adhesive layer on a predetermined surface typically of a foam layer or reinforcing layer using the pressure-sensitive adhesive composition; and a step (ii) of forming a layer such as a foam layer or reinforcing layer on the pressure-sensitive adhesive layer, or arranging the pressure-sensitive adhesive layer as an outermost layer. Exemplary concrete processes for use in the step (i) of forming a pressure-sensitive adhesive layer on a predetermined surface typically of a foam layer or reinforcing layer using the pressure-sensitive adhesive composition include a direct application process and a transfer process. In the direct application process, the pressure-sensitive adhesive composition is applied to a predetermined surface typically of a foam layer or reinforcing layer, and the applied layer is subjected to a treatment such as heating and/or drying according to necessity to thereby form a pressure-sensitive adhesive layer. In the transfer process, the pressure-sensitive adhesive composition is applied to a surface of a suitable carrier (e.g., a release surface of a release liner), the applied layer is subjected to a treatment such as heating and/or drying according to necessity to thereby form a pressure-sensitive adhesive layer, and the pressure-sensitive adhesive layer on the suitable carrier (e.g.,

pressure-sensitive adhesive layer on the releasably treated surface of the release liner) is transferred onto a predetermined surface typically of the foam layer or reinforcing layer.

Specifically, the double-coated pressure-sensitive adhesive tape illustrated in Fig. 1 is a double-coated pressure-sensitive adhesive tape having a laminate structure of [(pressure-sensitive adhesive layer)/(foam layer)/(pressure-sensitive adhesive layer) / (reinforcing layer)/(pressure-sensitive adhesive layer)]. This double-coated pressure-sensitive adhesive tape may be prepared by (i) preparing a multilayer structure of [(foam layer)/(pressure-sensitive adhesive layer) /(reinforcing layer)] by forming a pressure-sensitive adhesive layer on one side of a foam layer typically through the direct application process or transfer process and arranging a reinforcing layer on the pressure-sensitive adhesive layer, or by forming a pressure-sensitive adhesive layer on one side of a reinforcing layer typically through the direct application process or transfer process and arranging a form layer on the pressure-sensitive adhesive layer; and (ii) forming pressure-sensitive adhesive layers respectively on both the foam layer side and the reinforcing layer side of the multilayer structure typically through the direct application process or transfer process.

The double-coated pressure-sensitive adhesive tapes, as having the foam layer, excel in properties such as shock absorption, fittability to uneven or bumped portions, waterproofness, workability, and sealing performance.

An exemplary customary double-coated pressure-sensitive adhesive tape includes a foam layer and, respectively arranged on both sides thereof, pressure-sensitive adhesive layers. This adhesive tape (hereinafter also simply referred to as "customary adhesive tape" or "customary double-coated pressure-sensitive adhesive tape") has a layer structure of [(pressure-sensitive adhesive layer)/(foam layer)/(pressure-sensitive adhesive layer) ] and corresponds to the double-coated pressure-sensitive adhesive tape according to the present invention, except for not having the reinforcing layer. The customary adhesive tape, when once fixed to an adherend and then removed from the adherend (e.g., for reworking or for removable after use), may suffer from delamination between the foam layer and the pressure-sensitive adhesive layer, failure of the foam layer, interlayer fracture due to the cleavage of the foam layer, and deposition (remaining) of the pressure-sensitive adhesive on the adherend, because the foam layer may show insufficient strength although it has satisfactory flexibility.

Typically, when the customary double-coated pressure-sensitive adhesive tape having a layer structure of [(pressure-sensitive adhesive layer) / (foam layer) / (pressure-sensitive adhesive layer)] is used for the recovery of a member (part or component) or easy disjoining of the adhered assembly, the interlayer fracture due to the cleavage of the foam layer, if occurring upon removal of the adhesive tape from the adherend, may impede the recovery or disjoining. In an illustrative example, when a member (part or component) is fixed to a target work (e.g., container, cabinet, or product) at a desired position through the customary double-coated pressure-sensitive adhesive tape to give a structure including the member, the double-coated pressure-sensitive adhesive tape, and the target work, and the member is to be recovered or the structure is to be disjoined after use, the interlayer fracture due to the cleavage of the foam layer, if occurring, may impede the recovery of the member or the disjoining of the structure.

In contrast, the double-coated pressure-sensitive adhesive tape according to the present invention includes the reinforcing layer in addition to the foam layer, thereby makes up for the strength of the foam layer, and overcomes the drawbacks of the customary double-coated pressure-sensitive adhesive tape which includes a foam layer, and arranged respectively on both sides thereof, pressure-sensitive adhesive layers. When the double-coated pressure-sensitive adhesive tape according to the present invention is removed from the adherend for reworking or after use, the reinforcing layer of the double-coated pressure-sensitive adhesive tape plays a role as a grip (hold) for peeling off. The double-coated pressure-sensitive adhesive tape may therefore be easily removable even having a small total thickness, without causing problems such as delamination between the foam layer and the pressure-sensitive adhesive layer, failure of the foam layer, interlayer fracture due to the cleavage of the foam layer, and deposition of the pressure-sensitive adhesive on the adherend.

Examples of materials for the adherends, i.e., the member (part or component) and the target work (e.g., container, cabinet, or product) include, but are not limited to, metals such as stainless steels and aluminum; glass; plastics (resins) such as polycarbonates, poly(methyl methacrylate)s (PMMAs), polypropylenes, and poly(ethylene terephthalate)s (PETs) ; and composite materials including them.

The double-coated pressure-sensitive adhesive tapes according to the present invention have satisfactory removability with respect to various adherends (e.g., adherends made from any of metals, plastics, glass, and composite materials of them). This is because the double-coated pressure-sensitive adhesive tapes include the reinforcing layer in combination with the foam layer. The reinforcing layer plays a role as a grip or hold when the double-coated pressure-sensitive adhesive tapes are removed form the adherends for reworking or after use.

As has been described above, the double-coated pressure-sensitive adhesive tapes according to embodiments of the present invention may have characteristic properties such as cutting (punching) workability, removability in reworking (re-application), fittability to uneven or bumped portions, sealing performance, waterproofness, bonding reliability, workability, optical functions, resistance to repulsion, easiness-to-peel, and insulating properties. The double-coated pressure-sensitive adhesive tapes are therefore very useful typically for fixing lenses of mobile phones, for fixing key modules of mobile phones, as shock absorbers for electronic equipment, for fixing decorative panels of television sets, for protecting battery packs of personal computers, and for waterproofing of lenses in digital video camcorders.

Examples

The present invention will be illustrated in further detail with reference to several working examples below. It should be noted, however, that these examples are never construed to limit the scope of the present invention.

Example 1

A solution of an acrylic polymer was prepared by placing 69 parts by weight of toluene and 163 parts by weight of ethyl acetate both as solvents, 80 parts by weight of butyl acrylate, 20 parts by weight of 2-ethylhexyl acrylate, 3 parts by weight of acrylic acid, 5 parts by weight of vinyl acetate, 0.1 part by weight of 2-hydroxyethyl acrylate, and 0.2 part by weight of an initiator 2,2-azobisisobutyronitrile in a reactor equipped with a condenser, a nitrogen inlet tube, a thermometer, a dropping funnel, and a stirrer; and carrying out polymerization at 60°C in a nitrogen stream for 6 hours.

The above-prepared solution was combined with 30 parts by weight of a polymerized rosin ester resin (softening point: 123°C) and 1.5 parts by weight of an isocyanate crosslinking agent (trade name "CORONATE L" supplied by Nippon Polyurethane Industry Co., Ltd.) each in terms of solids content per 100 parts by weight of the acrylic polymer in the solution, and thereby yielded an acrylic pressure-sensitive adhesive composition.

The prepared acrylic pressure-sensitive adhesive composition was applied to a release paper 135 $\mu$m thick using a bar coater and dried at 110°C for 3 minutes to form a pressure-sensitive adhesive layer 25 $\mu$m thick thereon. The release paper had been treated with a silicone.

The pressure-sensitive adhesive layer was transferred to a sheet-like foam, and a PET substrate was affixed onto the pressure-sensitive adhesive layer, and thereby yielded a laminate of [ (foam) / (pressure-sensitive adhesive layer) / (PET substrate)]. The sheet-like foam was a product supplied by Sekisui Chemical Co., Ltd. under the trade name "Volara XL-HN #03001W Black," having a thickness of 100 $\mu$m, an average cell diameter of 163 $\mu$m, and a density of 0.34 g/cc. The PET substrate was a product supplied by Toray Industries Inc. under the trade name "Lumirror # 5 AF53" having a non-cellular structure with a thickness of 5 $\mu$m. Other two plies of the above-prepared pressure-sensitive adhesive layers were respectively transferred to both sides of the laminate and thereby yielded a double-coated pressure-sensitive adhesive tape having a total thickness of 180 $\mu$m. This had a structure of [(pressure-sensitive adhesive layer; foam-layer-side surface pressure-sensitive adhesive layer) / (foam layer) / (pressure-sensitive adhesive layer)/(reinforcing layer) / (pressure-sensitive adhesive layer; reinforcing-layer-side surface pressure-sensitive adhesive layer) ].

Example 2

A double-coated pressure-sensitive adhesive tape having a total thickness of 187 $\mu$m was prepared by the procedure of Example 1, except for using a PET substrate (non-cellular structure, thickness: 12 $\mu$m, trade name "Lumirror S-10 # 12" supplied by Toray Industries Inc.) instead of the PET substrate (non-cellular structure, thickness: 5 $\mu$m, trade name "Lumirror # 5 AF53," supplied by Toray Industries Inc.). The double-coated pressure-sensitive adhesive tape had a structure of [(pressure-sensitive adhesive layer; foam-layer-side surface pressure-sensitive adhesive layer) / (foam layer) /(pressure-sensitive adhesive layer) / (reinforcing layer) / (pressure-sensitive adhesive layer; reinforcing-layer-side surface pressure-sensitive adhesive layer) ].

Example 3

A double-coated pressure-sensitive adhesive tape having a total thickness of 200 $\mu$m was prepared by the procedure of Example 1, except for using a foam (trade name "Volara XL-HN #03001W White," supplied by Sekisui Chemical Co., Ltd., thickness: 100 $\mu$m, average cell diameter: 163 $\mu$m, density: 0.34 g/cc) as the foam and using a PET substrate (non-cellular structure, thickness: 25 $\mu$m, trade name "Lumirror S-10 #25" supplied by Toray Industries Inc.) instead of the PET substrate (non-cellular structure, thickness: 5 $\mu$m, trade name "Lumirror #5 AF53," supplied by Toray Industries Inc.). The double-coated pressure-sensitive adhesive tape had a structure of [(pressure-sensitive adhesive layer; foam-layer-side surface pressure-sensitive adhesive layer) / (foam layer)/(pressure-sensitive adhesive layer) / (reinforcing layer)/(pressure-sensitive adhesive layer; reinforcing-layer-side surface pressure-sensitive adhesive layer)].

Example 4

A double-coated pressure-sensitive adhesive tape having a total thickness of 255 $\mu$m was prepared by the procedure of Example 1, except for forming a pressure-sensitive adhesive layer having a thickness of 50 $\mu$m by applying the acrylic pressure-sensitive adhesive composition to a release paper 135 $\mu$m thick, which had been treated with a silicone, using a bar coater and drying the applied layer at 110°C for 3 minutes. The double-coated pressure-sensitive adhesive tape had a structure of [(pressure-sensitive adhesive layer; foam-layer-side surface pressure-sensitive adhesive layer) / (foam layer) / (pressure-sensitive adhesive layer)/(reinforcing layer) / (pressure-sensitive adhesive layer; reinforcing-layer-side surface pressure-sensitive adhesive layer)].

Example 5

A double-coated pressure-sensitive adhesive tape having a total thickness of 262 $\mu$m was prepared by the procedure of Example 2, except for forming a pressure-sensitive adhesive layer having a thickness of 50 $\mu$m by applying the acrylic pressure-sensitive adhesive composition to a release paper 135 $\mu$m thick, which had been treated with a silicone, using a bar coater and drying the applied layer at 110°C for 3 minutes. The double-coated pressure-sensitive adhesive tape had a structure of [(pressure-sensitive adhesive layer; foam-layer-side surface pressure-sensitive adhesive layer) / (foam layer) / (pressure-sensitive adhesive layer) / (reinforcing layer)/(pressure-sensitive adhesive layer; reinforcing-layer-side surface pressure-sensitive adhesive layer)].

Comparative Example 1

A double-coated pressure-sensitive adhesive tape used herein was a commercially available double-coated pressure-sensitive adhesive tape under the trade name "No. 57115B," having a structure of [(pressure-sensitive adhesive layer) / (foam layer)/(pressure-sensitive adhesive layer)] and having a total thickness of 150 μm.

Comparative Example 2

A double-coated pressure-sensitive adhesive tape used herein was a commercially available double-coated pressure-sensitive adhesive tape under the trade name "No. 57120B," having a structure of [(pressure-sensitive adhesive layer) / (foam layer) / (pressure-sensitive adhesive layer)] and having a total thickness of 200 μm.

Testing

The double-coated pressure-sensitive adhesive tapes according to the examples and comparative examples were each subjected to measurements or determinations of 180-degree peel strengths (under high-speed peeling conditions and low-speed peeling conditions), push out force, drop impact resistance, optical properties, waterproofness, compression load, dielectric breakdown strength, and removability.

180-Degree Peel Strengths

A series of test specimens was prepared by cutting each double-coated pressure-sensitive adhesive tape to a piece 10 mm in width and 100 mm in length, and affixing a backing PET film (25 μm thick) to one surface pressure-sensitive adhesive layer of the cut piece.

An adhesive face to be tested for adhesive strength was affixed to each of adherends (a stainless steel sheet (SUS 304BA sheet) and a glass plate (trade name "Slide Glass Hakuenma No. 1" supplied by Matsunami Glass Ind., Ltd.) through compression bonding with one reciprocating motion of a 2-kg roller, and left stand at an ambient temperature of 23°C and relative humidity of 50% for 30 minutes.

After being left stand, 180-degree peel strengths of the test specimens were measured by carrying out peeling at a peel angle of 180 degrees under low-speed peeling conditions [at a tensile speed of 300 mm/minute, using a universal tensile and compression testing machine (trade name "Tensile and Compression Testing Machine, TG-1kN" supplied by Minebea Co., Ltd.) ] and under high-speed peeling conditions [at tensile speeds of 5 m/min and 10 m/min, using a high-speed peeling tester (supplied by Tester Sangyo Co., Ltd.) ]. The measurements were performed at an ambient temperature of 23°C and relative humidity of 50%.

The measurements were performed both on an adhesive face provided by the foam-layer-side surface pressure-sensitive adhesive layer (hereinafter also referred to as "foam side") and on an adhesive face provided by the reinforcing-layer-side surface pressure-sensitive adhesive layer (hereinafter also referred to as "removable side").

The measured data are shown in Table 1 below.

Table 1

| | Tensile speed | Example 1 | | Example 2 | | Example 3 | | Example 4 | | Example 5 | |
|---|---|---|---|---|---|---|---|---|---|---|---|
| | | Removable side | Foam side | Removable side | Foam side | Removable side | Foam side | Removable side | Foam side | Removable side | Foam side |
| 180° Peel strength [N/10mm] to SUS 304BA sheet | 300 [mm/minute] | 5.7 | 7.7 | 5.5 | 7.4 | 5.0 | 6.8 | 7.2 | 7.8 | 7.4 | 7.8 |
| | 5 [m/minute] | 9.5 | 8.3 | 7.2 | 7.3 | 7.7 | 7.5 | 9.8 | 6.7 | 9.9 | 7.1 |
| | 10 [m/minute] | 4.1 | 7.6 | 8.7 | 6.6 | 9.0 | 7.5 | 6.8 | 7.0 | 12.8 | 7.1 |
| 180° peel strength [N/10 mm] to glass plate | 300 [mm/minute] | 6.0 | 7.8 | 5.6 | 7.3 | 4.8 | 6.6 | 9.8 | 8.0 | 7.7 | 8.2 |
| | 5 [m/minute] | 8.2 | 8.2 | 6.8 | 7.5 | 6.5 | 7.8 | 8.9 | 6.7 | 9.4 | 7.6 |
| | 10 [m/minute] | 8.2 | 7.3 | 8.2 | 6.6 | 8.1 | 8.1 | 15.8 | 6.7 | 11.3 | 7.0 |

Compression Load

A series of test pieces of 30 cm in length and 30 cm in width was prepared by stacking ten plies of each double-coated pressure-sensitive adhesive tape to give laminates and cutting the laminates.

The test pieces were placed between flat, parallel plates of a universal tensile and compression testing machine (Tensile and Compression Testing Machine "TG-1kN" (trade name) supplied by Minebea Co., Ltd.), compressed at a rate of 10 mm/minute by 10%, 20%, 30%, 40%, and 50% of the initial thickness, loads upon compression were measured, and compression loads upon compression by different percentages were determined according to the following equation:

$$\text{Compression load [kPa]} = (\text{Load upon compression by a given compression percentage})/(\text{Area of test piece})$$

Table 2

|  | Total thickness [μm] | Compression load (kPa) | | | | |
|---|---|---|---|---|---|---|
|  |  | Compression by 10% | Compression by 20% | Compression by 30% | Compression by 40% | Compression by 50% |
| Example 1 | 180 | 0.04 | 1.17 | 6.88 | 28.95 | overload |
| Example 2 | 187 | 0.03 | 0.14 | 4.32 | 25.51 | overload |
| Example 3 | 200 | 1.69 | 10.49 | overload | overload | overload |
| Example 4 | 255 | 0.09 | 7.53 | 31.17 | overload | overload |
| Example 5 | 262 | 0.05 | 5.03 | 34.32 | overload | overload |
| Com. Ex. 1 | 150 | 0.06 | 1.99 | 6.01 | 13.51 | overload |
| Com. Ex. 2 | 200 | 0.11 | 3.17 | 9.85 | overload | overload |

The term "overload" in Table 2 means that the load exceeded the measurable upper limit of a load cell of the tensile and compression testing machine.

Push Out Force

A series of frame-shaped double-coated pressure-sensitive adhesive tapes of 40 mm in outer width, 60 mm in outer length, and 1 mm in frame width as shown in Fig. 2A was prepared by cutting the above-prepared double-coated pressure-sensitive adhesive tapes.

An acrylic plate (acrylic lens; 40 mm in width, 60 mm in length, and 1 mm in thickness) and a polycarbonate plate (PC plate) (70 mm in width, 80 mm in length, and 2 mm in thickness) having a through hole of 15 mm in diameter at the center part thereof were affixed to each other through each of the frame-shaped double-coated pressure-sensitive adhesive tapes through compression bonding with one reciprocating motion of a roller under a predetermined load (1 kg, 2 kg, 3 kg, 4 kg, or 5 kg) to give test specimens including a test specimen compressed and bonded under 1-kg load (1-kg test specimen), a 2-kg test specimen, a 3-kg test specimen, a 4-kg test specimen, and a 5-kg test specimen (see Figs. 2A and 2B).

Independently, a test specimen after compression bonding with one reciprocating motion of a 5-kg roller (5-kg test specimen) was placed in an autoclave and subjected to further compression bonding at a temperature of 50°C and a pressure of 5 atmospheres for 1 hour to give a test specimen (autoclaved test specimen). The autoclaved test specimen is assumed to have an adhesion area of the frame-shaped double-coated pressure-sensitive adhesive tape of 100%.

Regarding the double-coated pressure-sensitive adhesive tapes according to the examples, the (foam side) adhesive face provided by the foam-layer-side surface pressure-sensitive adhesive layer was affixed to the polycarbonate plate, whereas the (removable side) adhesive face provided by the reinforcing-layer-side surface pressure-sensitive adhesive layer was affixed to the acrylic plate.

Figs. 2A and 2B are a schematic top view and a schematic cross-sectional view along the lines A-A', respectively, of a test specimen used in the measurement of the push out force. In Figs. 2A and 2B, reference numerals "21" stands for the polycarbonate plate, "22" stands for the frame-shaped double-coated pressure-sensitive adhesive tape, "23" stands for the acrylic plate, and "24" stands for the through hole of the polycarbonate plate.

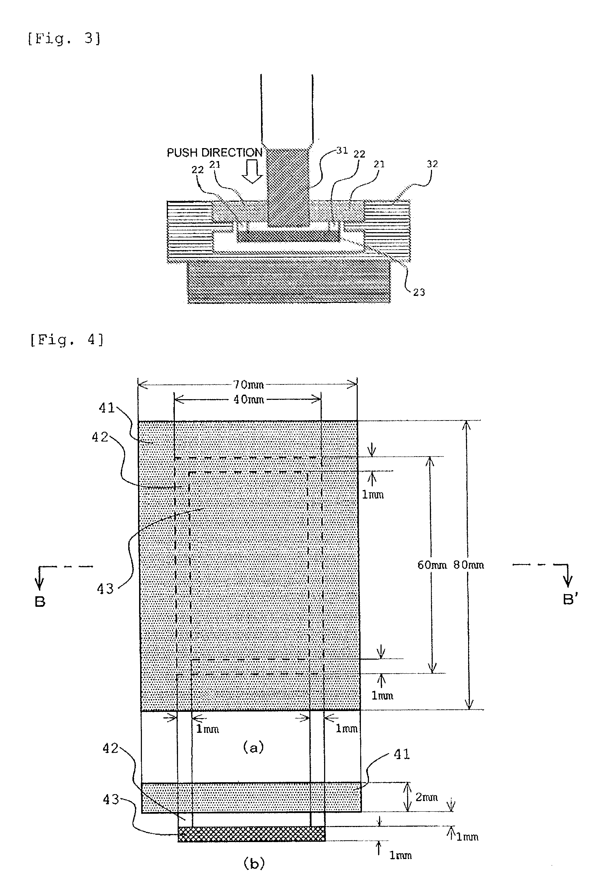

Next, the test specimens were mounted to a universal tensile and compression testing machine (trade name "Tensile and Compression Testing Machine, TG-1kN" supplied by Minebea Co., Ltd.), a round bar was allowed to pass through the through-hole of the polycarbonate plate, the acrylic plate was pushed by the round bar at a rate of 10 mm/ minute, and a largest stress until the acrylic plate was separated from the polycarbonate plate was measured as a push out force (Fig. 3). The measurements were performed at room temperature. The measured data are shown in Table 3 below.

Fig. 3 is a schematic cross-sectional view illustrating how to measure the push out force. In Fig. 3, the reference numerals "21" stands for the polycarbonate plate, "22" stands for the frame-shaped double-coated pressure-sensitive adhesive tape, "23" stands for the acrylic plate, "31" stands for the round bar, and "32" stands for a support. With reference to Fig. 3, a test specimen was fixed in the support 32 of the tensile and compression testing machine, and the acrylic plate 23 of the test specimen was pushed by the round bar 31 which had passed through the through-hole of the polycarbonate plate 21. Upon the pushing of the acrylic plate, the polycarbonate plate 21 in the test specimen did not suffer from warpage and breakage due to load applied thereon.

Table 3

| | Push out force [N] | | | | | |
|---|---|---|---|---|---|---|
| | 1-kg Test specimen | 2-kg Test specimen | 3-kg Test specimen | 4-kg Test specimen | 5-kg Test specimen | Autoclaved test specimen |
| Example 1 | 65 | 71 | 73 | 76 | 78 | 83 |
| Example 2 | 64 | 72 | 74 | 78 | 79 | 84 |
| Example 3 | 51 | 56 | 60 | 63 | 68 | 70 |
| Example 4 | 52 | 59 | 60 | 62 | 62 | 66 |
| Example 5 | 53 | 58 | 61 | 61 | 64 | 68 |
| Com. Ex. 1 | 66 | 70 | 72 | 73 | 73 | 80 |
| Com. Ex. 2 | 55 | 58 | 60 | 60 | 61 | 64 |

Drop Impact Resistance

A series of frame-shaped (trim-form) double-coated pressure-sensitive adhesive tapes 40 mm in outer width, 60 mm in outer length, and 1 mm in frame width was prepared by cutting the above-prepared double-coated pressure-sensitive adhesive tapes.

An acrylic plate (acrylic lens; 40 mm in width, 60 mm in length, and 1 mm in thickness) and a polycarbonate plate (PC plate) (70 mm in width, 80 mm in length, and 2 mm in thickness) were affixed to each other through each of the frame-shaped double-coated pressure-sensitive adhesive tapes through compression bonding with one reciprocating motion of a 2-kg roller and thereby yielded test specimens (see Figs. 4A and 4B).

Regarding the double-coated pressure-sensitive adhesive tapes according to the examples, the (foam side) adhesive face provided by the foam-layer-side surface pressure-sensitive adhesive layer was affixed to the polycarbonate plate, whereas the (removable side) adhesive face provided by the reinforcing-layer-side surface pressure-sensitive adhesive layer was affixed to the acrylic plate.

Next, the test specimens were each adjusted to have a total weight of 110 g with a weight attached on it, and then allowed to fall freely from a height of 1.2 meters to a concrete plate to determine the drop impact resistance of the test specimens. The drop impact resistance was determined by allowing each test specimen to fall freely at room temperature (about 23°C) 18 times. Of the test specimens after 18-time free falls at room temperature, those holding the acrylic plate during the 18-time free falls were further allowed to fall freely 60 times at low temperatures (-5°C).

Criteria:

Good: The sample held the acrylic plate without cracking (breakage) both during 18-time free falls at room temperature and during 60-time free falls at low temperatures;

Poor: The sample suffered from cracking of the acrylic plate during free falls at room temperature, or the sample held the acrylic plate without cracking during free falls at room temperature but suffered from cracking of the acrylic plate during free falls at low temperatures

Figs. 4A and 4B are a schematic top view and a schematic cross-sectional view along the lines B-B', respectively, of a test specimen for the measurement of drop impact resistance. In Figs. 4A and 4B, the reference numerals "41" stands for the polycarbonate plate, "42" stands for the frame-shaped double-coated pressure-sensitive adhesive tape, and "43" stands for the acrylic plate (acrylic lens).

Table 4

| | Drop impact resistance | |
|---|---|---|
| | Room temperature | Low temperature |
| Example 1 | Good | Good |
| Example 2 | Good | Good |
| Example 3 | Good | Good |
| Example 4 | Good | Good |
| Example 5 | Good | Good |
| Comparative Example 1 | Good | Good |
| Comparative Example 2 | Good | Good |

Optical Properties

The visible-light transmittance was determined by applying light at a wavelength of 550 nm to one side of a double-coated pressure-sensitive adhesive tape and measuring the intensity of light passing through the adhesive tape to the other side using a spectrophotometer (trade name "Model U-4100 Spectrophotometer" supplied by Hitachi High-Technologies Corporation).

Table 5

| | Visible-light transmittance [%] |
|---|---|
| Example 1 | 5.41 |
| Example 2 | 5.38 |
| Example 3 | 29.38 |
| Example 4 | 5.08 |
| Example 5 | 5.01 |
| Comparative Example 1 | 6.07 |
| Comparative Example 2 | 5.44 |

Waterproofness

A series of frame-shaped double-coated pressure-sensitive adhesive tapes (60 mm in outer width, 40 mm in outer length, and 1 mm in frame width) was prepared by cutting the above-prepared pressure-sensitive adhesive tapes.

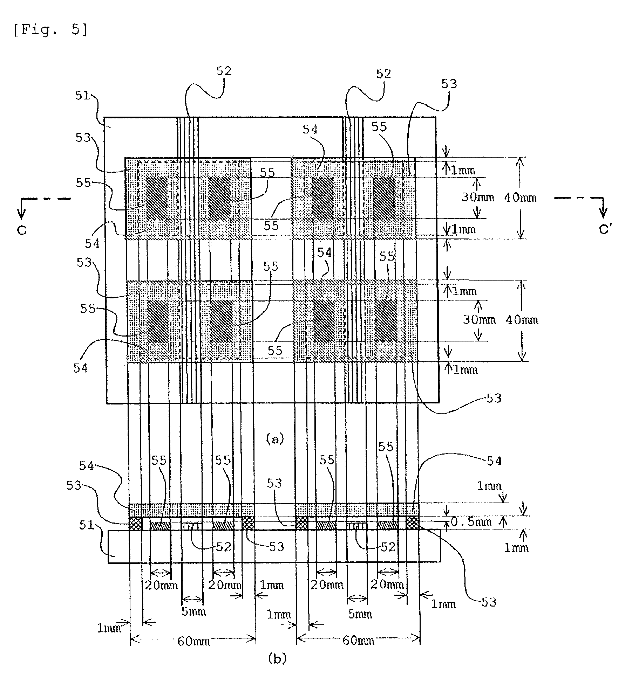

Next, each of the frame-shaped double-coated pressure-sensitive adhesive tapes was applied to four acrylic plates (acrylic lenses, each 60 mm in width, 40 mm in length, and 1 mm in thickness), respectively. Independently, two bump tapes (5 mm in width) were applied to a polycarbonate plate (PC plate). The four acrylic plates each bearing the frame-shaped double-coated pressure-sensitive adhesive tape were affixed to the polycarbonate plate bearing the bump tape through compression bonding with one reciprocating motion of a 2-kg roller, so that the frame-shaped double-coated pressure-sensitive adhesive tape faced the bump tape. Thus, a series of test specimens having bumps corresponding to the thicknesses of the bump tapes (bump heights; 10 $\mu$m, 20 $\mu$m, 30 $\mu$m, 50 $\mu$m, 70 $\mu$m, and 100 $\mu$m) were prepared (see Figs. 5A and 5B).

The bump tapes were applied to the polycarbonate plate so as to form bumps with target bump heights.

Independently, a series of test specimens having a bump height of 0 $\mu$m without level difference was prepared by the procedure as above, except for affixing the four acrylic plates bearing the frame-shaped double-coated pressure-sensitive adhesive tapes to a polycarbonate plate bearing no bump tape and having a smooth surface through compression bonding with one reciprocating motion of a 2-kg roller.

In these procedures, eight plies of a nonwoven fabric (each 35 mm in width, 55 mm in length, and 0.05 mm in thickness) per one test specimen were placed between the acrylic plate and polycarbonate plate. The nonwoven fabric, if absorbing water, changes in color and was thereby used to visually determine whether water invaded inside of the test specimen. The nonwoven fabric does not influence the tests for the waterproofness.

Regarding the double-coated pressure-sensitive adhesive tapes according to the examples, the (foam side) adhesive face provided by the foam-layer-side surface pressure-sensitive adhesive layer was affixed to the polycarbonate plate, whereas the (removable side) adhesive face provided by the reinforcing-layer-side surface pressure-sensitive adhesive layer was affixed to the acrylic plate.

The waterproof tests were performed on the test specimens having different bump heights (corresponding to the thicknesses of the bump tape) according to IPX7 standard (Japanese Industrial Standards (JIS) C 0920/International Electrotechnical Commission (IEC) standard 60529). Specifically, each test specimen was submerged 1 meter deep in a water tank under standard conditions of a temperature of 23°C and humidity of 50% for 30 minutes, and whether water invaded the inside of the test specimen was observed.

The waterproof tests were conducted after aging the test specimens having different bump heights under standard conditions of a temperature of 23°C and humidity of 50% for 30 minutes.

For each bump height, two test specimens each bearing four acrylic plates were prepared (see Figs. 5A and 5B), and a total of eight samples per bump height were visually observed whether water invaded the inside of the sample. In this connection, one sample herein included one acrylic plate and had one space surrounded by the double-coated pressure-sensitive adhesive tape, and the nonwoven fabric was placed in the space. The results are shown in Table 6. Numerical values indicated as data in Table 6 are numbers of samples showing no water invasion into the inside space and being evaluated as having "good waterproofness." Typically, when indicated as "8," it means that all the eight samples were evaluated as having good waterproofness. Likewise, when indicated as "7," seven samples out of the eight samples were evaluated as having good waterproofness. When indicated as "0," all the eight samples suffered from water invasion into the inside space.

Figs. 5A and 5B are a schematic top view and a schematic cross-sectional view along the lines C-C', respectively, of a test specimen used in the testing of waterproofness. In Figs. 5A and 5B, the reference numerals "51" stands for the polycarbonate plate, "52" stands for the bump tape, "53" stands for the frame-shaped double-coated pressure-sensitive adhesive tape, "54" stands for the acrylic plate (acrylic lens), and "55" stands for the nonwoven fabric.

Table 6

| | Total thickness [μm] | Bump height (difference in level) [μm] | | | | | | |
|---|---|---|---|---|---|---|---|---|
| | | 0 | 10 | 20 | 30 | 50 | 70 | 100 |
| Example 1 | 180 | 8 | 8 | 8 | 8 | 5 | 0 | 0 |
| Example 2 | 187 | 8 | 8 | 8 | 8 | 5 | 0 | 0 |
| Example 3 | 200 | 8 | 8 | 8 | 8 | 5 | 0 | 0 |
| Example 4 | 255 | 8 | 8 | 8 | 8 | 6 | 0 | 0 |
| Example 5 | 262 | 8 | 8 | 8 | 8 | 6 | 0 | 0 |
| Comparative Example 1 | 150 | 8 | 8 | 8 | 8 | 7 | 0 | 0 |
| Comparative Example 2 | 200 | 8 | 8 | 8 | 8 | 7 | 0 | 0 |

Dielectric Breakdown Voltage

The dielectric breakdown voltage (dielectric breakdown strength) was determined according to the method prescribed in JIS C2107 by holding a sample double-coated pressure-sensitive adhesive tape between two stainless steel spherical electrodes having a diameter of 125 mm and a weight of 500 g, applying an increasing voltage at an increasing rate of 1.0 kV/s, and reading the maximum value at which electric conduction (dielectric breakdown) occurred. The maximum value herein was defined as the dielectric breakdown voltage.

Table 7

| | Dielectric breakdown voltage [kV/mm] |
| --- | --- |
| Example 1 | 6.5 |
| Example 2 | 6.9 |
| Example 3 | 9.2 |
| Example 4 | 7.2 |
| Example 5 | 7.5 |
| Comparative Example 1 | 5.9 |
| Comparative Example 2 | 6.3 |

Removability Evaluation Test

A PET film (trade name "Lumirror S-10 #25," supplied by Toray Industries Inc.) was lined on one adhesive face of a sample double-coated pressure-sensitive adhesive tape, from which a tape piece 10 mm in width and 100 mm in length was cut out.

Next, the other adhesive face of the tape piece was affixed to a glass plate (trade name "Slide Glass Hakuenma No. 1" supplied by Matsunami Glass Ind., Ltd.) through compression bonding with one reciprocating motion of a 2-kg roller and thereby yielded a series of test specimens.

Each of the test specimens was left stand at an ambient temperature of 23°C and 50% relative humidity for 30 minutes, and then the tape piece was peeled off from the glass plate under conditions at a peel angle of 180 degrees and a tensile speed of 5 m/min using a high-speed peel tester (supplied by Tester Sangyo Co., Ltd.). After peeling off the tape piece, the surface of the glass plate was visually observed. A test specimen showing no adhesive deposit was evaluated as having good removability ("Good"), and a test specimen showing adhesive deposit was evaluated as having poor re-removability ("Poor"). The results are shown in Table 8.

Table 8

| | Removability evaluation | |
| --- | --- | --- |
| | Removable side | Foam side |
| Example 1 | Good | Poor |
| Example 2 | Good | Poor |
| Example 3 | Good | Poor |
| Example 4 | Good | Poor |
| Example 5 | Good | Poor |
| Comparative Example 1 | Poor | Poor |
| Comparative Example 2 | Poor | Poor |

Reference Signs List

1        double-coated pressure-sensitive adhesive tape

11a      pressure-sensitive adhesive layer

11b      pressure-sensitive adhesive layer

12       pressure-sensitive adhesive layer

| | |
|---|---|
| 13 | foam layer |
| 14 | reinforcing layer |
| a | distance (distance in the thickness direction) |
| 21 | polycarbonate plate |
| 22 | frame-shaped double-coated pressure-sensitive adhesive tape |
| 23 | acrylic plate |
| 24 | through hole of polycarbonate plate |
| 31 | round bar |
| 32 | support |
| 41 | polycarbonate plate |
| 42 | frame-shaped double-coated pressure-sensitive adhesive tape |
| 43 | acrylic plate (acrylic lens) |
| 51 | polycarbonate plate |
| 52 | bump tape |
| 53 | frame-shaped double-coated pressure-sensitive adhesive tape |
| 54 | acrylic plate (acrylic lens) |
| 55 | nonwoven fabric |

**Claims**

**1.** A double-coated pressure-sensitive adhesive tape having a total thickness of 500 $\mu$m or less and comprising:

at least one foam layer;
at least one reinforcing layer; and
two surface pressure-sensitive adhesive layers as surface layers,
wherein at least one of the two surface pressure-sensitive adhesive layers is formed from a pressure-sensitive adhesive composition containing an acrylic polymer, a tackifier resin, and a crosslinking agent, the acrylic polymer including monomer units of an alkyl (meth)acrylate whose alkyl moiety being a linear or branched-chain alkyl group having 4 to 9 carbon atoms as an essential monomer component.

**2.** The double-coated pressure-sensitive adhesive tape according to claim 1, wherein the pressure-sensitive adhesive composition contains the tackifier resin in a content of 5 to 50 parts by weight and the crosslinking agent in a content of 0.001 to 10 parts by weight per 100 parts by weight of the acrylic polymer.

**3.** The double-coated pressure-sensitive adhesive tape according to one of claims 1 and 2,
wherein the crosslinking agent is an isocyanate crosslinking agent, and
wherein the acrylic polymer is an acrylic polymer comprising monomer units of: the alkyl (meth)acrylate whose alkyl moiety being a linear or branched-chain alkyl group having 4 to 9 carbon atoms; a carboxyl-containing monomer; and a hydroxyl-containing monomer, as essential monomer components.

**4.** The double-coated pressure-sensitive adhesive tape according to claim 3, wherein the acrylic polymer comprises monomer units of: 80 to 99.9 percent by weight of the alkyl (meth) acrylate whose alkyl moiety being a linear or branched-chain alkyl group having 4 to 9 carbon atoms; 0.1 to 10 percent by weight of the carboxyl-containing monomer; and 0.01 to 5 percent by weight of the hydroxyl-containing monomer, based on the total amount of monomer components constituting the acrylic polymer.

5. A double-coated pressure-sensitive adhesive tape having a total thickness of 500 μm or less and comprising:

at least one foam layer;
at least one reinforcing layer; and
two surface pressure-sensitive adhesive layers as surface layers constituting two adhesive faces,
wherein, in at least one of the two adhesive faces, the adhesive tape has a 180-degree peel strength of 15 newtons per 10 mm (N/10 mm) or less (under peeling conditions of 23°C, 50% relative humidity, a tensile speed of 5 meters per minute (m/min), and a peel angle of 180 degrees, with respect to a glass plate) and causes no adhesive deposit in the following removability evaluation test:
Removability evaluation test: the double-coated pressure-sensitive adhesive tape (10 mm in width and 100 mm in length) is affixed to a glass plate (trade name "Slide Glass Hakuenma No. 1" supplied by Matsunami Glass Ind., Ltd.), left stand in an atmospheric temperature of 23°C and relative humidity of 50% for 30 minutes, then peeled off from the glass plate at a peel angle of 180 degrees and a tensile speed of 5 m/min, and thereafter whether the adhesive remains on the surface of the glass plate is visually observed.

[Fig. 1]

[Fig. 2]

EP 2 404 972 A2

[Fig. 3]

PUSH DIRECTION

[Fig. 4]

70mm

40mm

41
42

43

B

B'

60mm 80mm

1mm

1mm

1mm 1mm

(a)

42 41

43

2mm
1mm
1mm

(b)

[Fig. 5]

(a)

(b)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001152111 A